# EUROPEAN PATENT SPECIFICATION

(11) **EP 4 293 614 B1**
(45) Date of publication and mention of the grant of the patent: **21.05.2025**
(21) Application number: 22752620.9
(22) Date of filing: 28.01.2022
(51) Int. Cl.: G06T 7/00

(54) **WORKPIECE DISPLAY ASSISTANCE DEVICE, WORKPIECE DISPLAY ASSISTANCE METHOD, AND WORKPIECE DISPLAY ASSISTANCE PROGRAM**
HILFSVORRICHTUNG ZUR ANZEIGE VON WERKSTÜCKEN, HILFSVERFAHREN ZUR ANZEIGE VON WERKSTÜCKEN UND HILFSPROGRAMM ZUR ANZEIGE VON WERKSTÜCKEN
DISPOSITIF D'AIDE À L'AFFICHAGE DE PIÈCE À USINER, PROCÉDÉ D'AIDE À L'AFFICHAGE DE PIÈCE À USINER ET PROGRAMME D'AIDE À L'AFFICHAGE D'UNE PIÈCE À USINER

(30) Priority: 12.02.2021 JP 2021020689
(43) Date of publication of application: 20.12.2023
(73) Proprietor: Amada Co., Ltd., Isehara-shi, Kanagawa 259-1196 (JP)
(72) Inventor: TAKATSU Satoshi, Isehara-shi, Kanagawa 259-1196 (JP); KASAI Yuuki, Isehara-shi, Kanagawa 259-1196 (JP); KUBOTA Teruyuki, Isehara-shi, Kanagawa 259-1196 (JP)
(74) Representative: Grünecker Patent- und Rechtsanwälte PartG mbB
(86) International application number: PCT/JP2022/003415
(87) International publication number: WO 2022/172791

(56) References cited:
- JP-A- 2002 082 704
- JP-A- 2015 035 211
- US-A1- 2010 034 484
- US-A1- 2017 148 153

## Description

### Technical Field

The present invention relates to a workpiece display assistance device, a workpiece display assistance method, and a workpiece display assistance program.

### Background Art

A bending machine for bending a workpiece is controlled by a numerical control (NC) program of an NC device that is a control device. The NC device displays various programs designed and manufactured using a computer-aided design (CAD)/computer-aided manufacturing (CAM) system or the like on the program production side such as a design department. The NC device is configured to perform operations necessary for executing various programs.

The bending machine and the NC device are each provided with a display, a monitor device, and the like for displaying various operation screens and guide screens. Hence, for example, a bending machine is known that can provide appropriate guidance on various operations and processing details on the program production side and the processing site side through these screens, which enables real-time communication (see Patent Document 1).

### Citation List

### Patent Literature

Patent Literature 1: Japanese Patent Application Laid-Open Publication No. 2005-288534

### Summary

At the time of setting a workpiece on a bending machine, a workpiece loading device, or the like, the workpiece to be set is displayed in advance on a display screen of a display device such as a display, as in the bending machine disclosed in Patent Document 1. This enables an operator to set the workpiece while confirming the orientation or the like of the workpiece at the time of setting. Usually, the workpiece is provided with a preformed hole or the like. Thus, the operator sets the workpiece on the bending machine using the hole or the like as a mark.

However, when the number of holes or the like in the workpiece is large, or when a feature that serves as a mark is difficult to find, the operator may not know how to set the workpiece on the bending machine or the like just by viewing the workpiece displayed on the display screen. When the operator performs a bending process with the workpiece set incorrectly, defective products will be produced in increasing numbers. Also, stopping the bending machine or the like and redoing the setting will result in reworking.

One aspect of the present invention is a workpiece display assistance device, a workpiece display assistance method, and a workpiece display assistance program that can prevent errors in workpiece setting by providing an operator with a good view of a feature point on a workpiece that serves as a mark.

According to one aspect of the present invention, it is possible to prevent errors in workpiece setting by providing the operator with a good view of a feature point on the workpiece that serves as a mark.

### Brief Description of Drawings

[Figure 1] Figure 1 is an explanatory diagram illustrating a basic configuration of a workpiece display assistance device according to a first embodiment of the present invention.
[Figure 2] Figure 2 is an explanatory view schematically illustrating an example of how a workpiece is displayed by the workpiece display assistance device.
[Figure 3] Figure 3 is a configuration diagram schematically illustrating a hardware configuration of the workpiece display assistance device.
[Figure 4] Figure 4 is a flowchart illustrating a workpiece display assistance process for realizing a workpiece display assistance method performed by the workpiece display assistance device.
[Figure 5] Figure 5 is an explanatory diagram illustrating an original model of a workpiece W and a plurality of matching models.
[Figure 6] Figure 6 is a diagram for explaining the outline of a matching process between the original model and each of the matching models.
[Figure 7] Figure 7 is a diagram for explaining extracted matching sections and a matching aggregate model.
[Figure 8] Figure 8 is a flowchart illustrating a determination process.
[Figure 9] Figure 9 is a diagram illustrating an example of a determination result.
[Figure 10] Figure 10 is a view illustrating an example of a display screen.
[Figure 11] Figure 11 is a flowchart illustrating pre-processing and a secondary determination process according to a second embodiment of the present invention.
[Figure 12] Figure 12 is a diagram for explaining matching sections ranked based on match rates.
[Figure 13] Figure 13 is a diagram for explaining the sorting of the matching sections based on the match rates.
[Figure 14] Figure 14 is a diagram for explaining non-matching sections ranked based on the match rates.
[Figure 15] Figure 15 is a diagram for explaining a pattern table in which combination patterns are arranged.
[Figure 16] Figure 16 is a diagram for explaining an example of the combination pattern.
[Figure 17] Figure 17 is a diagram for explaining the creation of a determination candidate model.
[Figure 18] Figure 18 is a diagram for explaining the creation of the determination candidate model.
[Figure 19] Figure 19 is a diagram for explaining a secondary determination process.
[Figure 20] Figure 20 is a diagram for explaining an example of a secondary determination result.
[Figure 21] Figure 21 is a diagram for explaining another example of the combination pattern.
[Figure 22] Figure 22 is a diagram for explaining the concept of a thinning process for the determination candidate model.
[Figure 23] Figure 23 is a diagram for explaining the concept of the thinning process for the determination candidate model.
[Figure 24] Figure 24 is a diagram for explaining the concept of the thinning process for the determination candidate model.
[Figure 25] Figure 25 is a diagram for explaining the concept of the thinning process for the determination candidate model.
[Figure 26] Figure 26 is a diagram for explaining the concept of the thinning process for the determination candidate model.
[Figure 27] Figure 27 is a diagram for explaining the concept of a checking process for the determination candidate model.
[Figure 28] Figure 28 is a view illustrating an example of a display screen.
[Figure 29] Figure 29 is a diagram for explaining holes h and feature points P on the workpiece W.

### Description of Embodiment

A workpiece display assistance device, a workpiece display assistance method, and a workpiece display assistance program according to each of embodiments of the present invention will be described in detail below with reference to the accompanying drawings. However, the following embodiments are not intended to limit the invention according to each claim, and not all the combinations of features described in the embodiments are essential to the solution of the invention. In the following embodiments, the scale or size of each component may be exaggerated, or some of the components may be omitted.

### <First Embodiment>

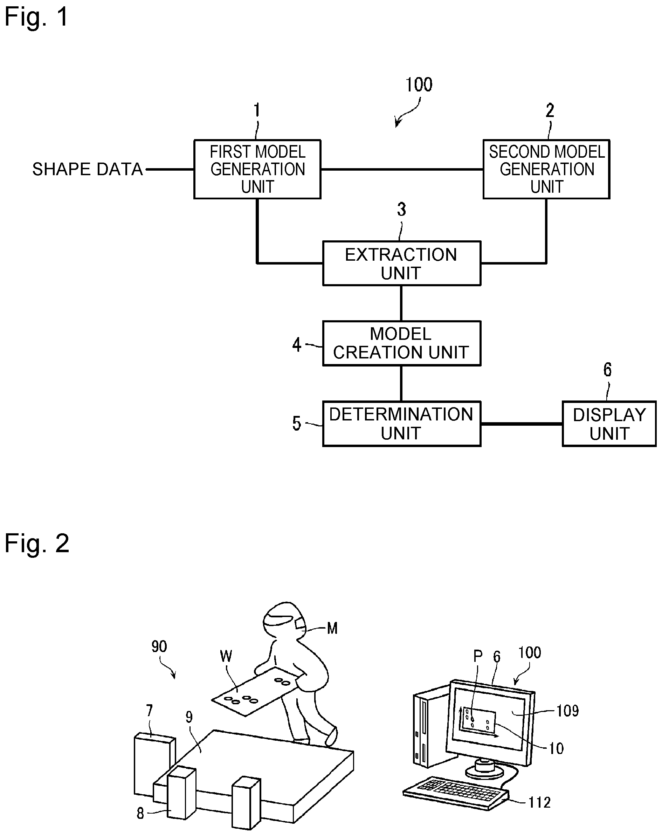

Figure 1 is an explanatory diagram illustrating a basic configuration of a workpiece display assistance device according to a first embodiment of the present invention. Figure 2 is an explanatory view schematically illustrating an example of how a workpiece is displayed by the workpiece display assistance device.

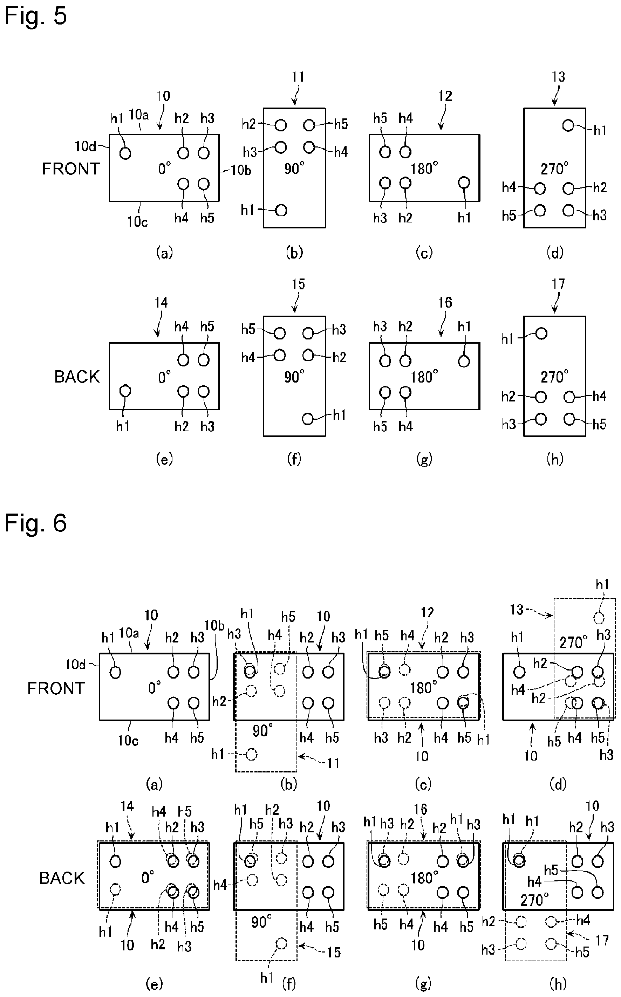

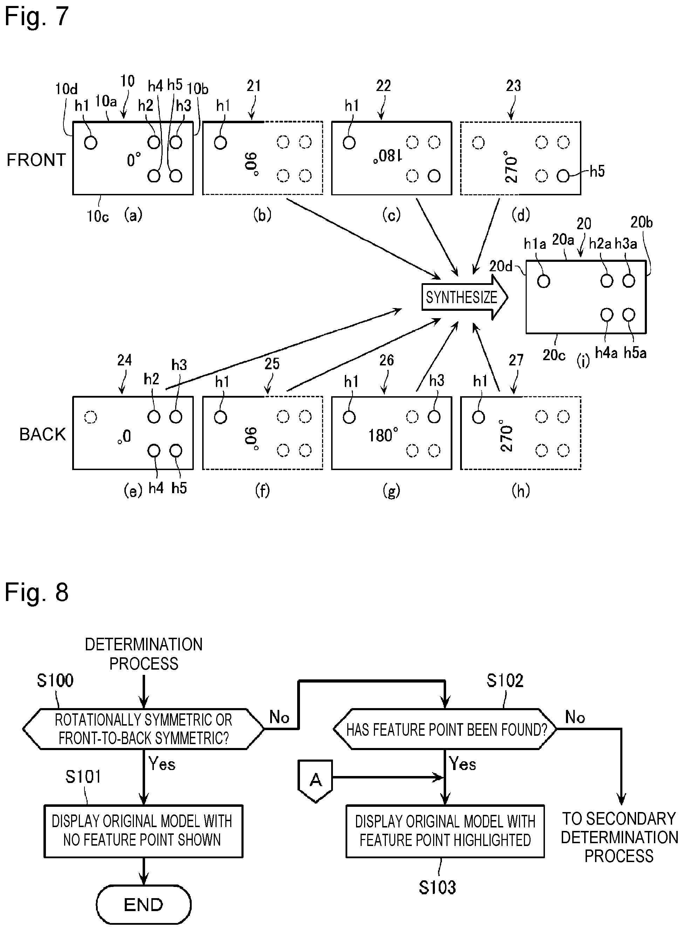

As illustrated in Figure 1, a workpiece display assistance device 100 according to the first embodiment basically includes: a first model generation unit 1 that obtains shape data of a workpiece W to be set (see Figure 2) and generates an original model 10 (see Figures 2 and 5) of the workpiece W based on the shape data; a second model generation unit 2 that generates a plurality of matching models 11 to 17 (see Figure 5) by rotating and/or inverting the original model 10; an extraction unit 3 that matches the plurality of matching models 11 to 17 to the original model 10 and extracts the aligned portions of the respective matching models 11 to 17 with the original model 10 as matching sections 21 to 27 (see Figure 7); a model creation unit 4 that creates a matching aggregate model 20 (see Figure 7) by aggregating the extracted matching sections 21 to 27 in a state conforming to the original model 10 and synthesizing the aggregated matching sections 21 to 27; a determination unit 5 that compares the original model 10 and the matching aggregate model 20 and makes a determination of a feature point P (see Figure 2) on the workpiece W; and a display unit 6 (see Figure 2) that displays the feature point P in a highlightable manner, along with an image of the workpiece W, on a display screen of a display device based on the determination result of the determination unit 5.

Note that the shape data of the workpiece W may be numerical data created using a CAD/CAM system or the like, or data of an image captured by a camera or the like. The feature point is a singular portion (where there is no symmetry) in the matching aggregate model 20 with respect to the original model 10, for example. Therefore, the feature point means a location (different point) where the shape changes from the original model 10 when the matching aggregate model 20 is rotated or inverted. The feature point in the present invention refers to a location representing a feature that serves as a mark when the workpiece W is set.

The workpiece display assistance device 100 can be installed at any location including a site where the workpiece W is set. As illustrated in Figure 2, the workpiece display assistance device 100 is installed at a location where at least the display unit 6 is visible to an operator M, for example, in a site where a workpiece loading device 90 including a workpiece turning device 7, a magnetic floater 8, and a pallet 9 is installed (near the workpiece loading device 90 or in other locations) in a so-called automatic machine (automated machine).

When the workpiece W is set on the workpiece loading device 90, the image of the original model 10 of the workpiece W is displayed along with the highlighted feature point P on a display 109 that is the display device of the display unit 6 of the workpiece display assistance device 100. This enables the operator M to set the workpiece W in a correct orientation on the workpiece loading device 90 using the highlighted feature point P as a mark.

In a so-called general-purpose machine (stand-alone machine), the workpiece display assistance device 100 may be installed so that at least the display unit 6 also has, for example, a function of a device operation panel (not illustrated). The workpiece display assistance device 100 may be configured to have a function of an NC device that controls the automatic machine or the general-purpose machine to perform bending and the like.

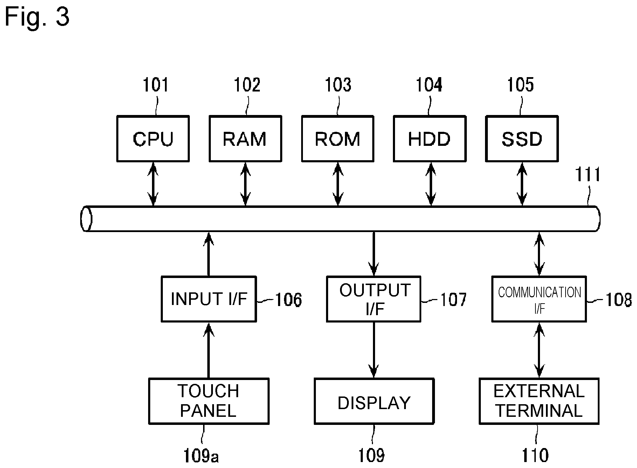

Figure 3 is a configuration diagram schematically illustrating a hardware configuration of the workpiece display assistance device.

As illustrated in Figure 3, the workpiece display assistance device 100 includes, for example, a central processing unit (CPU) 101, a random-access memory (RAM) 102, a read-only memory (ROM) 103, a hard disk drive (HDD) 104, and a solid-state drive (SSD) 105 as the hardware configuration. The workpiece display assistance device 100 includes an input interface (I/F) 106, an output interface (I/F) 107, and a communication interface (I/F) 108. Each of the components 101 to 108 is interconnected by a bus 111. Therefore, the workpiece display assistance device 100 can be configured by an information processing device such as an existing personal computer, server device, or workstation.

The CPU101 executes various programs stored in the RAM 102, the ROM 103, the HDD 104, the SSD 105, and the like to control the entire workpiece display assistance device 100, and executes a workpiece display assistance program to realize all the functions of the first model generation unit 1, the second model generation unit 2, the extraction unit 3, the model creation unit 4, and the determination unit 5.

The RAM 102 can be used as a work area for the CPU101. The ROM 103 stores various programs such as a boot program, the workpiece display assistance program, and an NC program at least in a readable manner. The HDD 104 and the SSD 105 store various types of data such as shape data, model data, and image data in a readable and writable manner, and function as the storage unit of the workpiece display assistance device 100 along with the RAM 102 and the ROM 103.

Input devices such as a keyboard 112 (see Figure 2) and a mouse (not illustrated) and a touch panel 109a are connected to the input I/F 106 to receive information associated with an operation input from the operator M or a user. The display 109 of the display unit 6 incorporated with, for example, a touch panel 109a is connected to the output I/F 107 and outputs various kinds of information including the image of the original model 10 to be displayed on a monitor. Note that the workpiece display assistance device 100 can be connected to a network such as the Internet (not illustrated) and an external terminal 110 such as a program execution terminal like the CAD/CAM system via the communication I/F 108.

Next, a workpiece display assistance process procedure of the workpiece display assistance device 100 will be described.

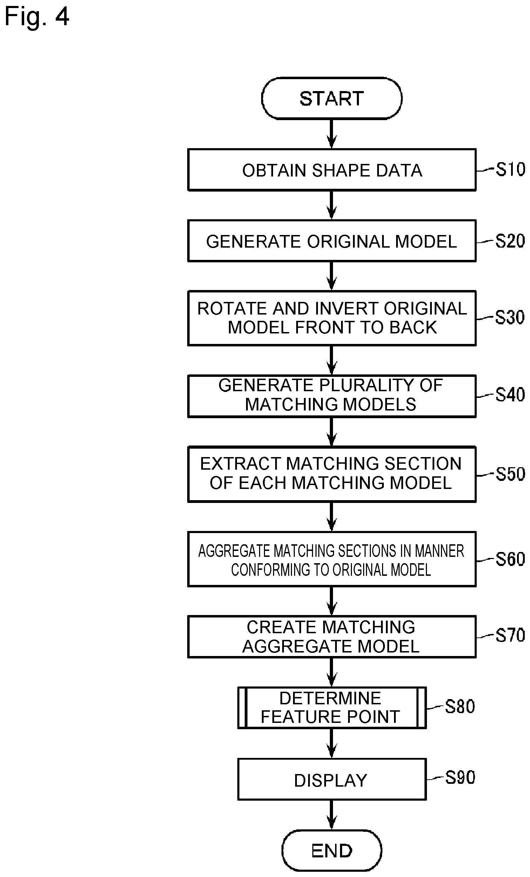

Figure 4 is a flowchart illustrating a workpiece display assistance process for realizing a workpiece display assistance method performed by the workpiece display assistance device. Figure 5 is an explanatory diagram illustrating the original model of the workpiece W and a plurality of matching models.

As illustrated in Figure 4, in the workpiece display assistance device 100, the first model generation unit 1 obtains the shape data of the workpiece W to be set (step S10). Based on the obtained shape data, the first model generation unit 1 generates the original model 10 as illustrated in Figure 5(a), for example (step S20).

The original model 10 is, for example, a picture (image) representing the front side of the workpiece W with no rotation (an angle of 0°). The original model 10 is formed in a rectangular shape having a pair of long sides 10a, 10c and a pair of short sides 10b, 10d. The original model 10 shows a plurality of holes (five holes in Figure 5) h1 to h5 drilled at predetermined locations so as to penetrate, for example, the front and back of the workpiece W. In the following drawings including Figure 5, "front" indicates the front side of the workpiece W, and "back" indicates the back side of the workpiece W.

Next, as illustrated in Figures 5(b) to 5(h), the second model generation unit 2 rotates the original model 10 at a predetermined angle (here, 90°) and inverts the front and back sides of the original model 10, for example, (step S30) to generate a plurality of matching models 11 to 17 (step S40). The matching models 11 to 17 refers to one of the following: a picture (image) representing the front side of the workpiece W rotated, a picture (image) representing the back side of the workpiece W inverted front to back, or a picture (image) representing the back side of the inverted workpiece W rotated.

That is, the matching model 11 represents the front side of the original model 10 rotated 90° to the left (see Figure 5(b)). The matching model 12 represents the front side of the original model 10 rotated 180° to the left (see Figure 5(c)). The matching model 13 represents the front side of the original model 10 rotated 270° to the left (see Figure 5(d)).

On the other hand, the matching model 14 represents the back side of the original model 10 inverted front to back with no rotation (0° angle) (see Figure 5(e)). The matching model 15 represents the back side of the original model 10 inverted front to back and rotated 90° to the left (the matching model 14 rotated 90° to the left) (see Figure 5 (f)).

The matching model 16 represents the back side of the original model 10 inverted front to back and rotated 180° to the left (the matching model 14 rotated 180° to the left) (see Figure 5(g)). The matching model 17 represents the back side of the original model 10 inverted front to back and rotated 270° to the left (the matching model 14 rotated 270° to the left) (see Figure 5(h)).

Note that the rotation angle in the second model generation unit 2 is not limited to this, and the rotation does not necessarily have to be performed at equal angles (equal intervals). When more matching models rotated with finer rotation angle settings are generated, it is possible to improve the accuracy of feature point determination. However, it is preferable to generate a plurality of matching models at appropriate rotation angles because generating more matching models increases the processing load such as arithmetic processing.

Figure 6 is a diagram for explaining the outline of a matching process between the original model and each of the matching models. Figure 7 is a diagram for explaining extracted matching sections and a matching aggregate model.

After each of the matching models 11 to 17 is generated, the extraction unit 3 matches each of the plurality of matching models 11 to 17 to the original model 10 as illustrated in Figure 6(a) (see Figures 6(b) to 6(h)).

Here, the term "matching" refers to searching the original model 10 for a location most similar to each of the matching models 11 to 17, that is, searching for a place with the highest similarity. In the case of the present embodiment, the place with the highest similarity is a point where the largest portions of lines are aligned. Thus, "matching" refers to comparing the lengths of aligned lines to find a point where the largest portions of the lines are aligned. For example, a known template matching method can be used for the matching process in the extraction unit 3.

When the matching model 11 is matched to the original model 10, as illustrated in Figure 6(b), the hole h1 of the original model 10 and the hole h3 of the matching model 11 are aligned. In addition, a part of the long side 10a and the entirety of the short side 10d, which are continuous with the vicinity of the holes h1, h3 as corners, are aligned.

In Figure 6, the original model 10 is indicated by the solid line, and the matching models 11 to 17 are indicated by the dashed lines. Portions drawn with these solid and dashed lines displaced and parallel to each other so that the lines are almost aligned, or portions drawn with solid and dashed circles intersecting each other so that the circles are almost aligned, represent aligned portions that are actually consistent perfectly and aligned.

When the matching model 12 is matched to the original model 10, as illustrated in Figure 6(c), the hole h1 of the original model 10 and the hole h5 of the matching model 12 are aligned, and the hole h5 of the original model 10 and the hole h1 of the matching model 12 are aligned. The entirety of the long sides 10a, 10c and the short sides 10b, 10d of the original model 10 and the matching model 12 are aligned.

When the matching model 13 is matched to the original model 10, as illustrated in Figure 6(d), the hole h5 of the original model 10 and the hole h3 of the matching model 13 are aligned. In addition, a part of the long side 10c and the entirety of the short side 10b, which are continuous with the vicinity of the holes h5, h3 as corners, are aligned.

On the other hand, when the matching model 14 is matched to the original model 10, as illustrated in Figure 6(e), the hole h2 of the original model 10 and the hole h4 of the matching model 14 are aligned, and the hole h3 of the original model 10 and the hole h5 of the matching model 14 are aligned. The hole h4 of the original model 10 and the hole h2 of the matching model 14 are aligned, and the hole h5 of the original model 10 and the hole h3 of the matching model 14 are aligned. Further, the entirety of the long sides 10a, 10c and the short sides 10b, 10d of the original model 10 and the matching model 14 are aligned.

When the matching model 15 is matched to the original model 10, as illustrated in Figure 6(f), the hole h1 of the original model 10 and the hole h5 of the matching model 15 are aligned. In addition, a part of the long side 10a and the entirety of the short side 10d, which are continuous with the vicinity of the holes h1, h5 as corners, are aligned.

When the matching model 16 is matched to the original model 10, as illustrated in Figure 6(g), the hole h1 of the original model 10 and the hole h3 of the matching model 16 are aligned, and the hole h3 of the original model 10 and the hole h1 of the matching model 16 are aligned. The entirety of the long sides 10a, 10c and the short sides 10b, 10d of the original model 10 and the matching model 16 are aligned.

When the matching model 17 is matched to the original model 10, as illustrated in Figure 6(h), the hole h1 of the original model 10 and the hole h1 of the matching model 17 are aligned. In addition, a part of the long side 10a and the entirety of the short side 10d, which are continuous with the vicinity of the holes h1, h1 as corners, are aligned.

After each of the matching models 11 to 17 is matched to the original model 10 in this manner, as illustrated in Figure 7, the aligned portions of the respective matching models 11 to 17 with the original model 10 illustrated in Figure 7(a) are extracted as matching sections 21 to 27 (see Figures 7(b) to 7(h)) (step S50). In Figure 7: in Figure 7(a), the original model 10 is indicated by the solid line; and in Figures 7(b) to 7(h), the matching sections 21 to 27, aligned with the portions of the original model 10 indicated by the dashed lines, are indicated by the solid lines.

As illustrated in Figure 7(b), the matching section 21 includes the hole h1 of the original model 10, and a part of the long side 10a and the entirety of the short side 10d which are continuous with the vicinity of the hole h1 as a corner. As illustrated in Figure 7(c), the matching section 22 includes the holes h1, h5 and the entirety of the long sides 10a, 10c, and short sides 10b, 10d of the original model 10.

As illustrated in Figure 7(d), the matching section 23 includes the hole h5, and a part of the long side 10c and the entirety of the short side 10b which are continuous with the vicinity of the hole h5 as a corner. As illustrated in Figure 7(e), the matching section 24 includes the holes h2 to h5 and the entirety of the long sides 10a, 10c, and short sides 10b, 10d. As illustrated in Figure 7 (f), the matching section 25 includes the hole h1, and a part of the long side 10a and the entirety of the short side 10d which are continuous with the vicinity of the hole h1 as a corner.

Further, as illustrated in Figure 7(g), the matching section 26 includes the holes h1, h3 and the entirety of the long sides 10a, 10c and the short sides 10b, 10d. As illustrated in Figure 7(h), the matching section 27 includes the hole h1, and a part of the long side 10a and the entirety of the short side 10d which are continuous with the vicinity of the hole h1 as a corner.

After the matching sections 21 to 27 are extracted, the model creation unit 4 aggregates the extracted matching sections 21 to 27 into a state conforming to the original model 10, as illustrated in Figure 7(i) (step S60). These are then synthesized to create the matching aggregate model 20 (step S70).

In Figure 7(i), the matching aggregate model 20 is indicated by the solid line as in the original model 10 and has a pair of long sides 20a, 20c, a pair of short sides 20b, 20d, and holes h1a to h5a. Note that the original model 10, the matching models 11 to 17, the matching sections 21 to 27, and the matching aggregate model 20 can be stored in a storage unit (not illustrated).

Once the matching aggregate model 20 is created, a feature point determination process (step S80) is performed by the determination unit 5. In the determination process, first, the created matching aggregate model 20 is obtained and compared with the original model 10 to make a determination of the feature point on the workpiece W. Specifically, the determination is made on the feature point based on the presence or absence of a portion represented by a line, a point, or the like that remains after the matching aggregate model 20 is subtracted from the original model 10.

Then, the display unit 6 displays the feature point P in a highlightable manner, along with the image of the original model 10 representing the workpiece W, on the display screen of the display 109 (display device) based on the determination result of the determination unit 5 (step S90), and the workpiece display assistance process according to this flowchart is terminated.

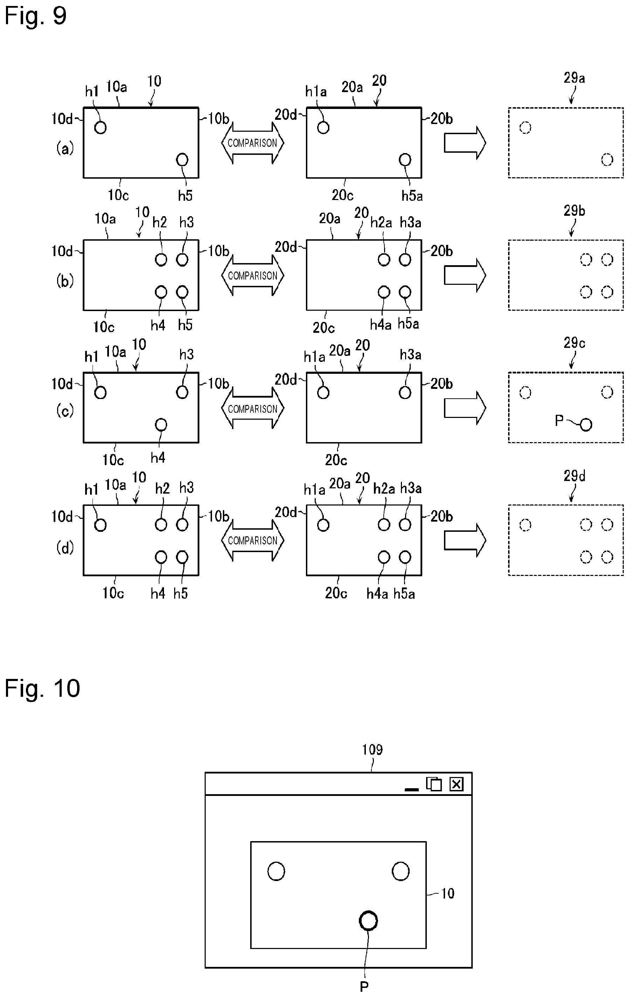

Here, the feature point determination process in step S80 above is described. Figure 8 is a flowchart illustrating the determination process. Figure 9 is a diagram illustrating an example of the determination result. Figure 10 is a view illustrating an example of the display screen.

As illustrated in Figure 8, in the determination process, the determination unit 5 first determines the presence or absence of a feature point based on whether or not the matching aggregate model 20 is rotationally symmetric or inversely symmetric (front-to-back symmetric) to the original model 10 (step S100). Specifically, as illustrated in Figure 9(a), when the original model 10 and the matching aggregate model 20 are compared and determined to be rotationally symmetric (Yes in step S100), no feature point appears as in a comparison result model 29a indicated by the dashed line, and it is determined that there is no feature point (no feature point is present).

That is, for example, the matching aggregate model 20 having the holes h1a, h5a, the long sides 20a, 20c, and the short sides 20b, 20d is rotationally symmetric to the original model 10 having the holes h1, h5, the long sides 10a, 10c, and the short sides 10b, 10d. Thus, no feature point, including the holes h1, h5, appears in the comparison result model 29a.

Similarly, as illustrated in Figure 9(b), when the original model 10 and the matching aggregate model 20 are compared and determined to be inversely symmetric (Yes in step S100), no feature point appears as in a comparison result model 29b indicated by the dashed line, and it is determined that there is no feature point. That is, for example, the matching aggregate model 20 having the holes h2a to h5a, the long sides 20a, 20c, and the short sides 20b, 20d is inversely symmetric to the original model 10 having the holes h2 to h5, the long sides 10a, 10c, and the short sides 10b, 10d. Therefore, no feature point, including the holes h2 to h5, appears in the comparison result model 29b.

When the matching aggregate model 20 is rotationally symmetric or inversely symmetric to the original model 10 as described above (Yes in step S100), the image of the original model 10 is displayed with no feature point shown on the display screen of the display 109 in the display process of step S90 above based on the determination result (step S101).

On the other hand, when the matching aggregate model 20 is determined not to be rotationally symmetric or inversely symmetric to the original model 10 (No in step S100), it is further determined whether a feature point has been found (step S102). At this stage, when it is determined that a feature point has been found (Yes in step S102), it is determined that there is a feature point (a feature point is present). In this case, based on the determination result, the display unit 6 displays the image of the original model 10 with the feature point highlighted on the display screen of the display 109 in the display process of step S90 above (step S103).

That is, as illustrated in Figure 9(c), when the original model 10 having the holes h1, h3, h4, the long sides 10a, 10c, and the short sides 10b, 10d is compared with the matching aggregate model 20 having the holes h1a, h3a, the long sides 20a, 20c, and the short sides 20b, 20d, and the original model 10 and the matching aggregate model 20 are not rotationally symmetric or inversely symmetric (No in step S100) and when the hole h4 as a feature point is found (Yes in step S102), for example, the feature point P (hole h4) of the original model 10 as indicated by the solid line appears in a comparison result model 29c indicated by the dashed line.

Thus, as illustrated in Figure 10, in step S103 above, the display unit 6 displays the image of the original model 10 of the workpiece W on the display screen of the display 109 with the feature point P highlighted based on the determination result including the comparison result model 29c. Note that various display forms can be adopted for highlighting, such as changing only the color of the feature point P or making only the feature point P blink, as long as the display form is noticeable when in a visible state.

Therefore, by using the highlighted feature point P as a mark for the workpiece W, along with the image of the original model 10 displayed on the display screen, the operator M can determine the setting direction and orientation of the workpiece W and set the workpiece W without making errors. As described above, according to the workpiece display assistance device 100 of the first embodiment, the operator M can be provided with a good view of the feature point P on the workpiece W that serves as a mark, whereby errors in setting the workpiece W can be prevented as much as possible.

### <Second Embodiment>

On the other hand, when it is determined that the matching aggregate model 20 is not rotationally symmetric or inversely symmetric (No in step S100) and that there is no feature point P (No in step S102), the determination unit 5 executes a secondary determination process. Note that it is also possible to choose to terminate the process itself without executing the secondary determination process, but further performing the feature point determination by the secondary determination process makes it possible to detect the feature point more reliably.

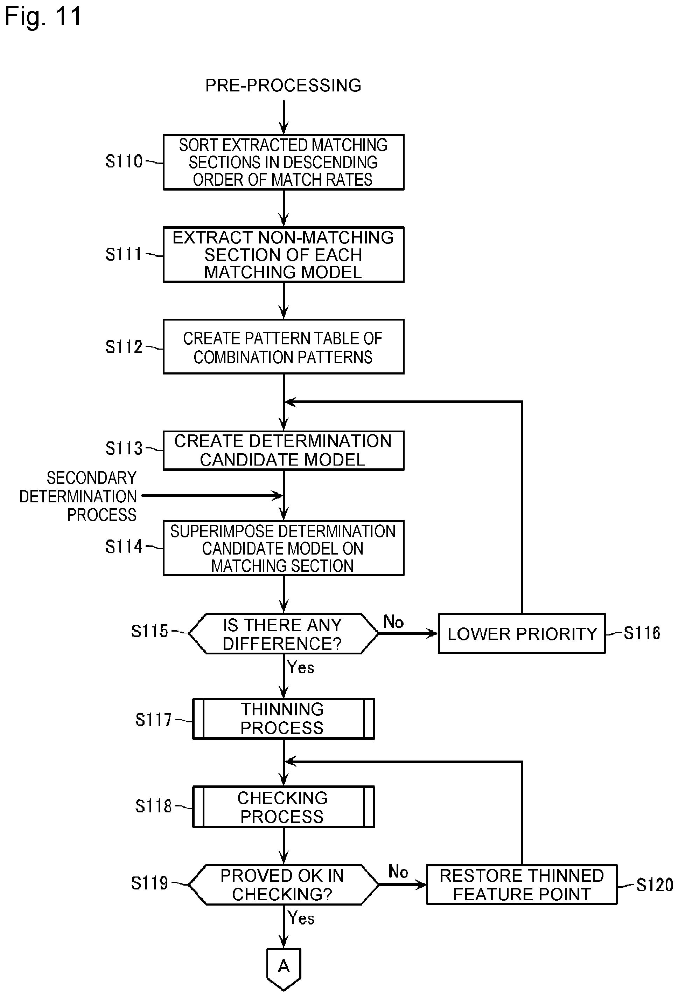

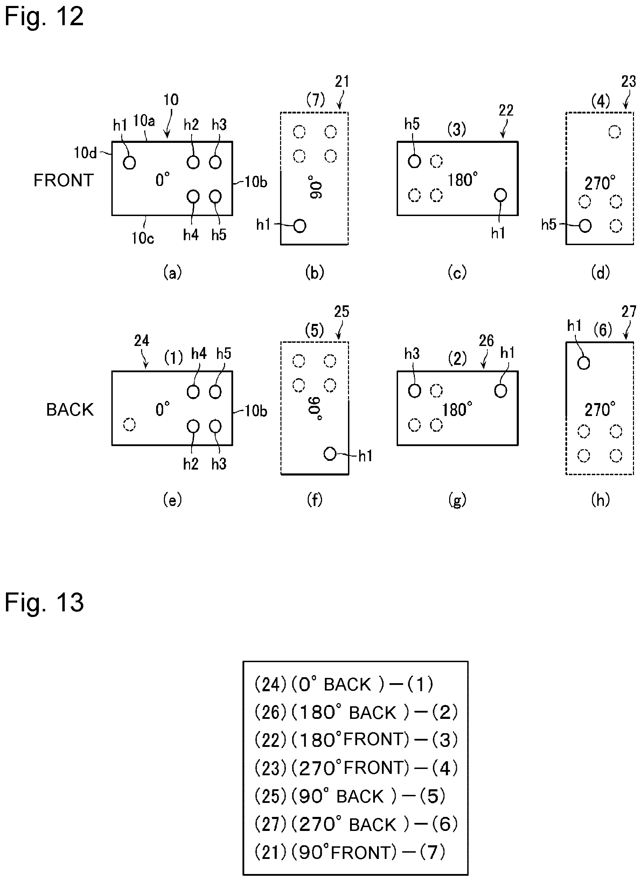

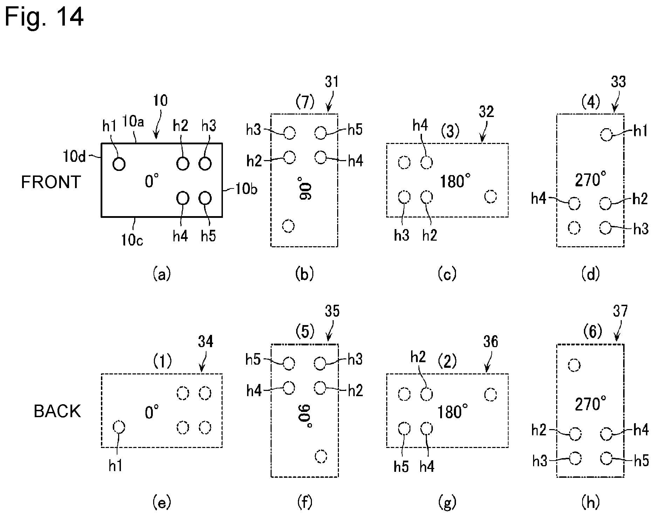

Figure 11 is a flowchart illustrating pre-processing and a secondary determination process according to a second embodiment of the present invention. Figure 12 is a diagram for explaining matching sections ranked based on match rates. Figure 13 is a diagram for explaining the sorting of the matching sections based on the match rates. Figure 14 is a diagram for explaining non-matching sections ranked based on the match rates. In the following description including Figure 11, the same components as those of the first embodiment and the modification thereof are denoted by the same reference numerals, and hence the duplicated description will be omitted below.

In the above determination process, as illustrated in Figure 9(d), for example, when the original model 10 having the holes h1 to h5, the long sides 10a, 10c, and the short sides 10b, 10d is compared with the matching aggregate model 20 having the holes h1a to h5a, the long sides 20a, 20c, and the short sides 20b, 20d, and the original model 10 and the matching aggregate model 20 are not rotationally symmetric or inversely symmetric (No in step S100) and when it is found that there is no feature point because no feature point was found (No in step S102), at first glance, no feature point appears at all as in a comparison result model 29d indicated by the dashed line, for example.

However, this may not always mean that there is no feature point in the workpiece W. Therefore, in the above case, the secondary determination process based on the concept of combination is performed, which goes one step further from the extraction of the partially different point (feature point) by simple comparison between the original model 10 and the matching aggregate model 20 as described above.

First, prior to the secondary determination process, the extraction unit 3 makes ranks based on the match rates of matching sections 21 to 27 and extracts non-aligned portions of the respective matching models 11 to 17 with the original model 10 as non-matching sections 31 to 37. The model creation unit 4 refers to a pattern table PT in which combination patterns obtained by combining the extracted non-matching sections 31 to 37 based on the ranks are arranged with use priorities added thereto, and creates a determination candidate model 30 by rotating and/or inverting the non-matching sections 31 to 37 that make up the combination patterns to return to the original states so as to conform to the original model 10, and combining the non-matching sections 31 to 37. In the secondary determination process, the determination unit 5 compares the determination candidate model 30 with each of the matching sections 21 to 27 and makes a determination of the feature point P

That is, as illustrated in Figure 11, as pre-processing prior to the secondary determination process, for example, the matching sections 21 to 27 (see Figures 7(b) to 7(h)) extracted by the extraction unit 3 in step S50 above are sorted in descending order of the match rates (step S110). Specifically, as illustrated in Figure 12, each of the matching sections 21 to 27 is first ranked with respect to the original model 10 illustrated in Figure 12(a) based on the match rate (the amount of alignment of the aligned portion).

In Figure 12: in Figure 12(a), the original model 10 is indicated by the solid line; and in Figures 12(b) to 12(h), the matching sections 21 to 27, aligned with the portions of the original model 10 indicated by the dashed lines, are indicated by the solid lines. The ranks are indicated by numbers in parentheses.

For example, the matching section 21 illustrated in Figure 12(b) has a seventh match rate (7), and the matching section 22 illustrated in Figure 12(c) has a third match rate (3). The matching section 23 illustrated in Figure 12(d) has a fourth match rate (4), and the matching section 24 illustrated in Figure 12(e) has a first match rate (1). Further, the matching section 25 illustrated in Figure 12(f) has a fifth match rate (5), the matching section 26 illustrated in Figure 12(g) has a second match rate (2), and the matching section 27 illustrated in Figure 12(h) has a sixth match rate (6).

When the matching sections 21 to 27 ((21) to (27)) ranked in the above manner are sorted in descending order from the first to seventh match rates ((1) to (7)), the result is as illustrated in Figure 13. That is, the order is as follows: the matching section 24 has the first match rate, the matching section 26 has the second match rate, the matching section 22 has the third match rate, the matching section 23 has the fourth match rate, the matching section 25 has the fifth match rate, the matching section 27 has the sixth match rate, and the matching section 21 has the seventh match rate.

Note that the matching sections 21, 25, 27 and the matching sections 22, 26, which appear to have similar match rates in the figure, are ranked according to the differences in detailed match rates determined through calculation. The information of the sorted matching sections 21 to 27 and the match rates is then stored in the storage unit.

Next, as illustrated in Figure 14, the extraction unit 3 subtracts the matching sections 21 to 27 illustrated in Figure 12 from the matching models 11 to 17 illustrated in Figure 5, thereby extracting the non-aligned portions with the original model 10 illustrated in Figure 14(a) as the non-matching sections 31 to 37 (step S111).

In Figure 14: in Figure 14(a), the original model 10 is indicated by the solid line; and in Figures 14(b) to 14(h), the matching sections 21 to 27 are indicated by the dashed lines, and the non-matching sections 31 to 37 are illustrated by dash-dot-dot lines. The non-matching sections 31 to 37 are ranked according to the ranked match rates stored in the matching sections 21 to 27.

As illustrated in Figure 14(b), the non-matching section 31 includes the holes h2 to h5, the entirety of the continuous long side 10c and short side 10b, and a part of the long side 10a of the original model 10. As illustrated in Figure 14(c), the non-matching section 32 includes the holes h2 to h4 of the original model 10. As illustrated in Figure 14(d), the non-matching section 33 includes the holes h1 to h4, the entirety of the continuous long side 10a and short side 10d, and a part of the long side 10c of the original model 10.

As illustrated in Figure 14(e), the non-matching section 34 includes the hole h1 of the original model 10. As illustrated in Figure 14(f), the non-matching section 35 includes the holes h2 to h5, the entirety of the continuous long side 10c and short side 10b, and a part of the long side 10a of the original model 10. As illustrated in Figure 14(g), the non-matching sections 36 include the holes h2, h4, h5 of the original model 10. As illustrated in Figure 14(h), the non-matching section 37 includes a part of the holes h2 to h5, the continuous long side 10c, the short side 10b, and the long side 10a of the original model 10.

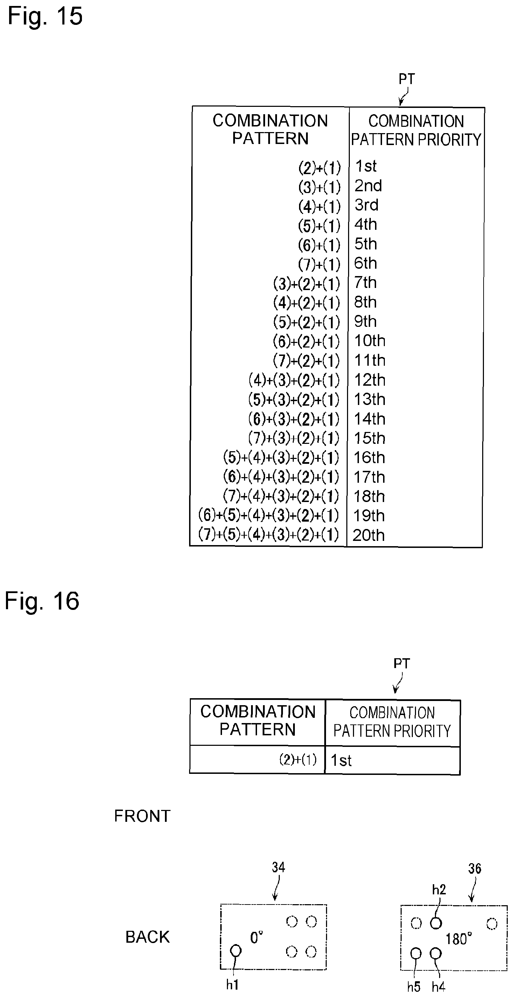

Figure 15 is a diagram for explaining a pattern table in which combination patterns are arranged. After the non-matching sections 31 to 37 are extracted as described above, for example, the extraction unit 3 or the model creation unit 4 creates a pattern table PT in which combination patterns obtained by combining the non-matching sections 31 to 37 based on ranks (1) to (7) are arranged, as illustrated in Figure 15 (step S112).

A use priority is added to the pattern table PT for each combination pattern, and this determines the priority of the combination patterns (e.g., 1st to 20th). For example, a combination pattern obtained by combining the non-matching sections 34, 36 with rank (1) and rank (2) has the first priority. A combination pattern obtained by combining the non-matching sections 34, 32 with rank (1) and rank (3) has the second priority. Other combination patterns and priorities are illustrated in the figure.

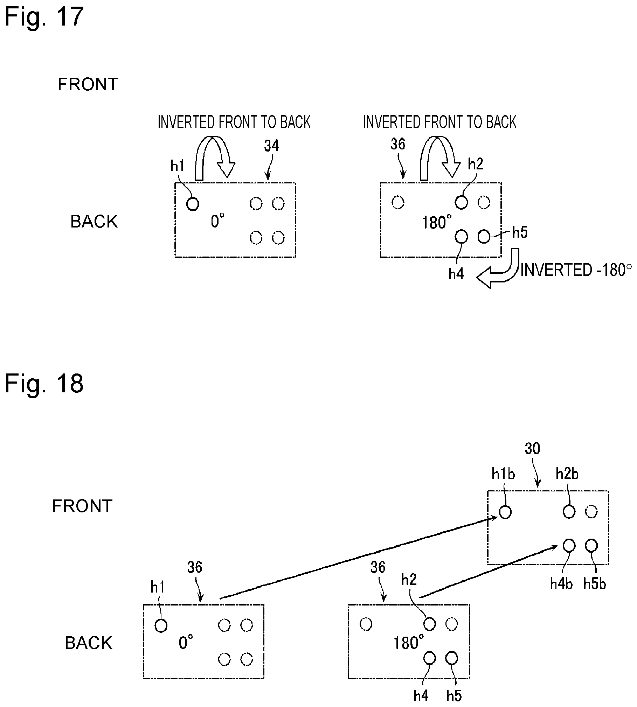

Figure 16 is a diagram for explaining an example of the combination pattern. Figures 17 and 18 are diagrams for explaining the creation of the determination candidate model. In Figures 16 to 18, the non-matching sections 34 (hole h1), 36 (holes h2, h4, h5) that are not aligned with the portions of the original model 10 indicated by the dash-dot-dot lines are indicated by the solid lines.

As illustrated in Figure 16, for example, a combination pattern with the first priority in the pattern table PT is made up of the non-matching section 34 (hole h1) with rank (1) and the non-matching section 36 (holes h2, h4, h5) with rank (2). The model creation unit 4 reads the non-matching sections 34, 36 from the storage unit, and rotates and/or inverts the non-matching sections 34, 36 to return to the original states so as to conform to the original model 10, as illustrated in Figure 17.

That is, since the non-matching section 34 represents the original model 10 inverted front to back with no rotation (i.e., 0° angle), the non-matching section 34 is inverted to return to the original state (inverted back to front). Since the non-matching section 36 represents the original model 10 inverted front to back and rotated 180° to the left, the non-matching section 36 is inverted to return to the original state (inverted back to front) and then rotated to return to the original state (rotated -180° = rotated 180° to the right). The non-matching sections 34, 36 returned in the above manner are combined (added up) as indicated by the arrows in the figure, to create the determination candidate model 30 as illustrated in Figure 18 made up of holes h1b, h2b, h4b, h5b (step S113).

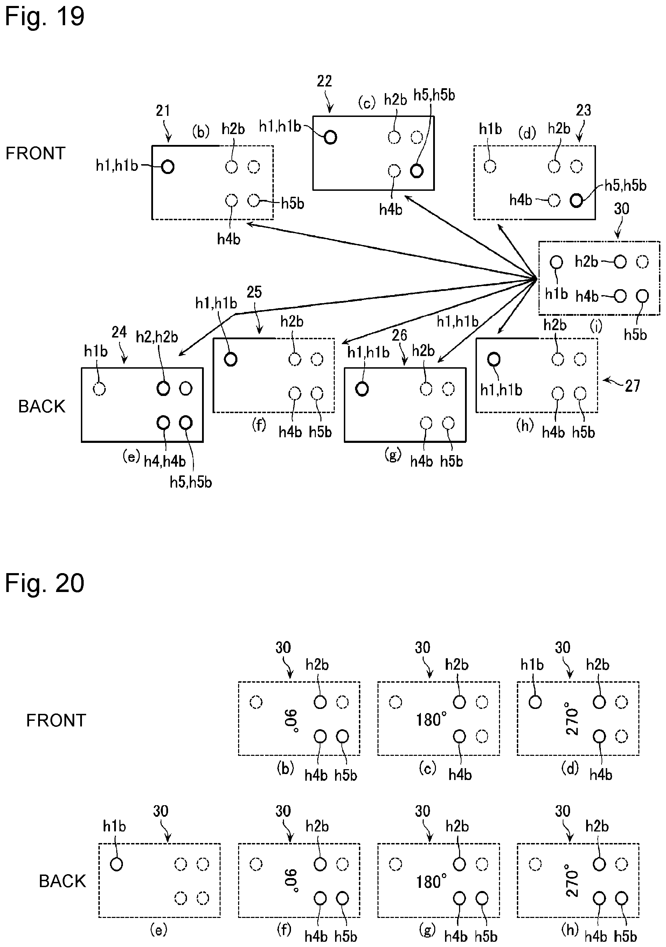

Figure 19 is a diagram for explaining the secondary determination process. Figure 20 is a diagram for explaining an example of a secondary determination result.

When the determination candidate model 30 is created, as illustrated in Figure 19, the determination unit 5 superimposes the determination candidate model 30 on each of the matching sections 21 to 27 as indicated by the arrows in Figure 19 (step S114), compares the determination candidate model 30 with each of the matching sections 21 to 27, detects a difference (step S115), and makes a determination of the feature point P in the secondary determination process.

In Figures 19 and 20, the original model 10 is not illustrated. In Figure 19, the holes h1b, h2b, h4b, h5b of the determination candidate model 30 in Figure 19(i) are indicated by the solid lines. In Figures 19(b) to 19(h), the matching sections 21 to 27 are indicated by the solid lines. Of the holes h1b, h2b, h4b, h5b of the determination candidate model 30, the holes that are aligned with the matching sections 21 to 27 are indicated by the thick lines, the holes that are not aligned with the matching sections 21 to 27 are indicated by the dash-dot-dot lines, and the other portions of the original model 10 are indicated by the dashed lines. Further, In Figure 20, of the holes h1b, h2b, h4b, h5b of the determination candidate model 30, the holes that are not aligned with the respective matching sections 21 to 27 are indicated by the solid lines, and the other portions are indicated by the dashed lines.

As illustrated in Figure 19(b), in the matching section 21, the hole h1b of the determination candidate model 30 is aligned with the hole h1, and the holes h2b, h4b, h5b are not aligned. Thus, as illustrated in Figure 20(b), the holes h2b, h4b, h5b of the determination candidate model 30 are detected as differences.

As illustrated in Figure 19(c), in the matching section 22, the holes h1b, h5b of the determination candidate model 30 are aligned with the holes h1, h5, respectively, and the holes h2b, h4b are not aligned. Thus, as illustrated in Figure 20(c), the holes h2b, h4b of the determination candidate model 30 are detected as differences.

As illustrated in Figure 19(d), in the matching section 23, the hole h5b of the determination candidate model 30 is aligned with the hole h5, and the holes h1b, h2b, h4b are not aligned. Thus, as illustrated in Figure 20(d), the holes h1b, h2b, h4b of the determination candidate model 30 are detected as differences.

As illustrated in Figure 19(e), in the matching section 24, the holes h2b, h4b, h5b of the determination candidate model 30 are aligned with the holes h2, h4, h5, respectively, and the hole h1b is not aligned. Therefore, as illustrated in Figure 20(e), the hole h1b of the determination candidate model 30 is detected as a difference.

As illustrated in Figure 19(f), in the matching section 25, the hole h1b of the determination candidate model 30 is aligned with the hole h1, and the holes h2b, h4b, h5b are not aligned. Thus, as illustrated in Figure 20(f), the holes h2b, h4b, h5b of the determination candidate model 30 are detected as differences.

As illustrated in Figure 19(g), in the matching section 26, the hole h1b of the determination candidate model 30 is aligned with the hole h1, and the holes h2b, h4b, h5b are not aligned. Thus, as illustrated in Figure 20(g), the holes h2b, h4b, h5b of the determination candidate model 30 are detected as differences.

As illustrated in Figure 19(h), in the matching section 27, the hole h1b of the determination candidate model 30 is aligned with the hole h1, and the holes h2b, h4b, h5b are not aligned. Thus, as illustrated in Figure 20(h), the holes h2b, h4b, h5b of the determination candidate model 30 are detected as differences. Here, when a difference is detected (Yes in step S115), it means the same as that it is determined that the feature point P is present. Hence the display process of step S90 above may be performed at this stage.

In the display process, although not illustrated, the image of the original model 10 of the workpiece W is displayed on the display screen of the display 109 while, for example, four feature points P (holes h1, h2, h4, h5) corresponding to the holes h1b, h2b, h4b, h5b of the determination candidate model 30 are highlighted.

On the other hand, when no difference is detected (No in step S115), it is determined that there is no feature point P in the determination candidate model 30 based on the combination pattern with the first priority. Therefore, the priority is lowered (step S116), the process shifts to step S113 above, and the subsequent processes are repeated.

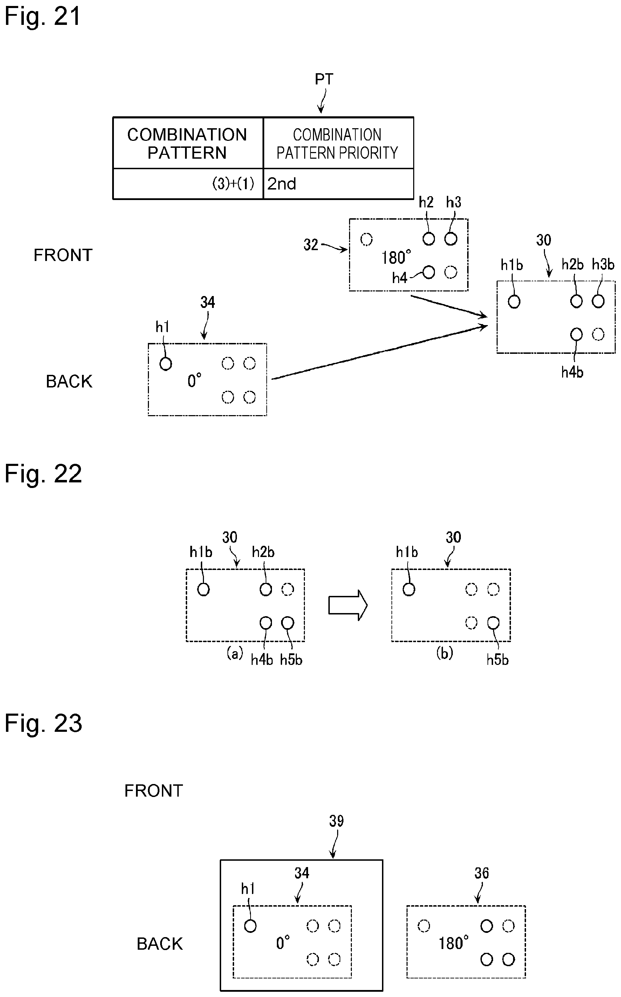

Figure 21 is a diagram for explaining another example of the combination pattern. Note that Figure 21 illustrates the non-matching sections 34, 32 that have already been rotated and/or inverted to return to the original states as described above.

As illustrated in Figure 21, for example, the combination pattern with the second priority in the pattern table PT is made up of the non-matching section 34 (hole h1) with rank (1) and the non-matching section 32 (holes h2, h3, h4) with rank (3). By combining these, the determination candidate model 30 made up of the holes h1b to h4b is created. Then, the determination unit 5 executes the secondary determination process again using the determination candidate model 30 created by lowering the priorities.

In this manner, when no difference is detected (No in step S115), the model creation unit 4 sequentially creates the determination candidate model 30 based on the use priority. Then, up to a time point when the feature point P is found by the secondary determination process, the model creation unit 4 continuously creates the determination candidate model 30 until the determination candidate model 30 of the combination pattern with the lowest use priority is created.

Accordingly, even when it is determined in step S102 above that there is no feature point P, the determination candidate models 30 can be created as many as the number of the combination patterns arranged in the pattern table PT and the determination can be repeated, thereby enabling the search for the feature point P to be performed to a deeper level.

The secondary determination process includes: a thinning process of extracting a location that representing the feature point P that meets a predetermined condition, for each of the non-matching sections that make up the combination pattern of the determination candidate model 30; and a checking process of inspecting the suitability of the determination candidate model 30 indicated by the combination pattern made up of the non-matching sections after thinning. Hereinafter, the thinning process and the checking process will be described using the determination candidate model 30 with the first priority as an example.

Figures 22 to 26 are diagrams for explaining the concept of the thinning process for the determination candidate model.

When differences are detected in step S115 above (Yes in step S115), the holes h1b, h2b, h4b, h5b can be recognized as the feature points P in the determination candidate model 30 with the first priority illustrated in Figure 22(a).

However, when there are many feature points P, it may be difficult for the operator M to accurately recognize the feature points P on the workpiece W as marks. Therefore, in order to lessen the attention workload for the operator M and others, as illustrated in Figure 22(b), the determination unit 5 executes the thinning process (step S117) to leave the specific holes h1b, h5b (specifically, the most characteristic locations) that meet the predetermined condition as the feature points P among the holes h1b, h2b, h4b, h5b of the determination candidate model 30.

That is, the thinning process refers to a process of erasing (thinning out) excess lines from the determination candidate model 30 created by the model creation unit 4. The fewer the number of elements to be combined (added up) in the non-matching sections 34, 36 that make up the determination candidate model 30, the fewer the number of feature points P that the operator M needs to pay attention to.

In the thinning process, a predetermined evaluation function for erasing lines can be used. Examples of the thinning policy (the above predetermined condition) based on the evaluation function include: (1) leaving the line that ensures the largest area and erasing the other lines; and (2) leaving the line closest to or farthest from the largest area and erasing the other lines.

The reasons for the above are that in case (1), the line that ensures the largest area is noticeable as the feature point P to the operator M, and in case (2), the line closest to the largest area is noticeable as the feature point P to the operator M who considers the closer mark easier to view, and the line farthest from the largest area is noticeable as the feature point P to the operator M who considers the farther mark easier to view. Other examples of the thinning policy (the predetermined condition) include: leaving a circular line and erasing the other lines; leaving a square line and erasing the other lines; and not performing thinning and leaving all the lines. Hereinafter, a description will be given using case (1) as an example.

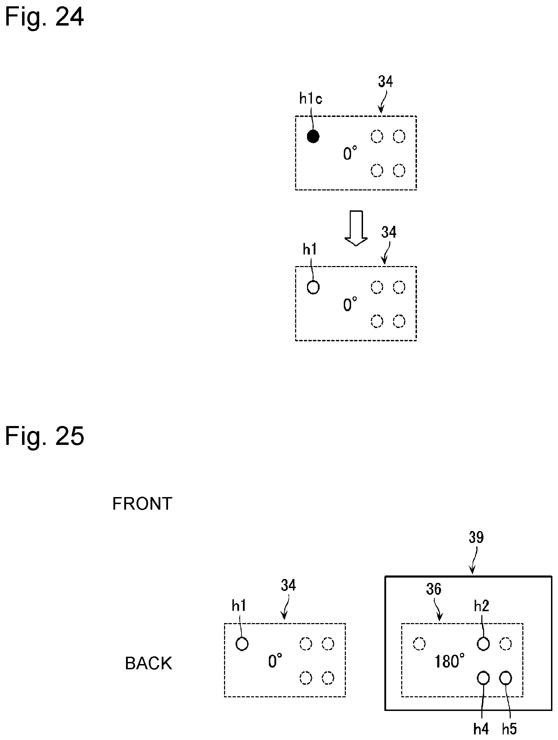

In the thinning process, first, as illustrated in Figure 23, the determination unit 5 focuses on the non-matching section 34 (hole h1) with rank (1), as indicated by an attention frame 39, out of the non-matching sections 34, 36 that make up the determination candidate model 30 with the first priority. Next, the determination unit 5 detects the contour of the non-matching section 34 (hole h1) by known image processing and calculates the area of a region h1c surrounded by the detected contour as, for example, a convex hull as illustrated in Figure 24.

Here, the convex hull refers to a minimum convex polygon (a figure covered so as not to be concave) including all the given points. Then, the contour of the one having the largest area is left. The non-matching section 34 illustrated in Figure 24 is made up of one hole h1, so that the non-matching section 34 (hole h1) itself is left as the feature point P.

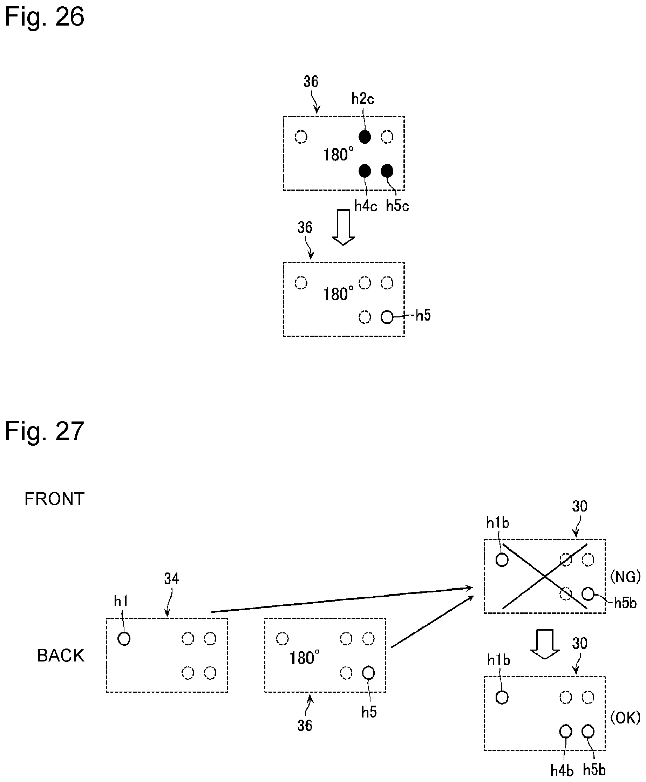

Next, as illustrated in Figure 25, the non-matching section 36 (holes h2, h4, h5) with rank (2) indicated by the attention frame 39 is the focus of attention. The determination unit 5 detects the contour of the non-matching section 36 (holes h2, h4, h5) and calculates the areas of the regions h2c, h4c, h5c surrounded by the detected contours as convex hulls, as illustrated in Figure 26.

When a plurality of regions h2c, h4c, h5c surrounded by the contours are detected as in the case of the non-matching section 36, the areas are obtained in order according to the detection order or the like as appropriate. Then, the contour of the one having the largest area is left. When the areas are all equal, it is possible to take measures such as leaving the contour of the first one detected.

In the non-matching section 36 illustrated in Figure 25, the regions h2c, h4c, h5c surrounded by three contours are detected, but when it is assumed that the region h5c surrounded by the contour has the largest area, the non-matching section 36 (hole h5) illustrated in Figure 26 is left as the feature point P, and the holes h2, h4 are erased (thinned out).

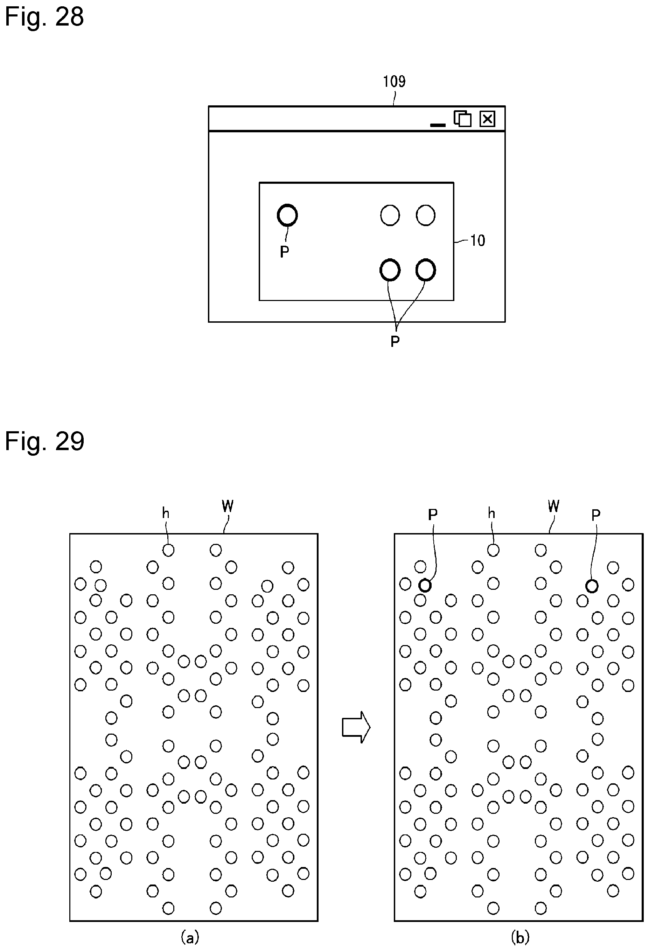

Figure 27 is a diagram for explaining the concept of the checking process for the determination candidate model. Figure 28 is a view illustrating an example of the display screen. Figure 29 is a diagram for explaining holes h and feature points P on the workpiece W.

As illustrated in Figure 27, the checking process (step S118) is executed on the non-matching sections 34, 36 that have undergone the thinning process. In the checking process, the determination candidate model 30 of the combination pattern made up of the non-matching sections 34, 36 after thinning is superimposed on each of the matching sections 21 to 27 described with reference to Figure 19 for comparison.

When the same difference as the difference (non-aligned hole) as described with reference to Figure 20 is detected as a result, it is NG (No in step S118). For example, when the determination candidate model 30 before thinning has differences indicated by the holes h1b, h5b, and the determination candidate model 30 after thinning has a difference indicated by two holes h1b, h5b, it is NG. In this case, of the erased holes h2, h4, for example, a hole having an area next to the area h5c surrounded by the contour (e.g., hole h4) is restored as the feature point P, and the checking process is executed again in step S118.

On the other hand, when a difference is detected that is different from the difference (non-aligned hole) as described with reference to Figure 20, it is OK (Yes in step S118). For example, when the determination candidate model 30 before thinning has differences indicated by two holes h1b, h5b, and the determination candidate model 30 after thinning has differences indicated by three holes h1b, h4b, h5b, it is OK.

By the determination unit 5 performing the thinning process and checking process thus described, it is possible to adopt, for example, the determination candidate model 30 made up of the holes h1b, h4b, h5b with the hole h2b thinned out, from the original determination candidate model 30 made up of the holes h1b, h2b, h4b, h5b.

In this case, the feature points P (holes h1, h4, h5) of the original model 10 appear, and hence the process shifts to step S103 above. In step S103, as illustrated in Figure 28, the image of the original model 10 of the workpiece W is displayed on the display screen of the display 109 while three feature points P (holes h1, h4, h5) corresponding to the holes h1b, h4b, h5b of the determination candidate model 30 after thinning are highlighted.

In the workpiece display assistance device 100 of the second embodiment, the same effect can be achieved as the effect in the first embodiment that the operator M can be provided with a good view of the feature point P on the workpiece W that serves as a mark, whereby errors in setting the workpiece W can be prevented as much as possible.

According to the second embodiment, it is particularly useful when many determined feature points P appear, such as when many holes h are present in the workpiece W, as illustrated in Figure 29(a). Even in such a case, as illustrated in Figure 29(b), the feature points P of the workpiece w can be thinned out for display, so that errors in setting the workpiece W can be prevented as much as possible.

By preventing errors (misplacement) in the setting the workpiece W, for example, it is possible to reduce the occurrence of alarms during processing and reduce delays in the processing time caused by such alarms. The operator M can set the workpiece W without hesitation while the generation of defective products is reduced effectively, so that it is possible to shorten the time required for setting and improve work efficiency.

While a few embodiments of the present invention have been described above, these embodiments are presented as examples and are not intended to limit the scope of the invention which is defined by the appended claims.

### Reference Signs List

- 1: first model generation unit
- 2: second model generation unit
- 3: extraction unit
- 4: model creation unit
- 5: determination unit
- 6: display unit
- 10: original model
- 11 to 17: matching model
- 20: matching aggregate model
- 21 to 27: matching section
- 30: determination candidate model
- 31 to 37: non-matching section

## Claims

1. A workpiece display assistance device comprising:
a first model generation unit (1) configured to obtain shape data of a workpiece to be set and generate an original model (10) of the workpiece based on the shape data;
a second model generation unit (2) configured to generate a plurality of matching models (11-17) by rotating and/or inverting the original model (10);
an extraction unit (3) configured to match each of the plurality of matching models (11-17) to the original model (10) and extract aligned portions of the respective matching models (11-17) with the original model (10) as matching sections;
a model creation unit (4) configured to create a matching aggregate model (20) by aggregating the matching sections extracted in a state conforming to the original model (10) and synthesizing the matching sections;
**characterized in that** the display assistance device further comprises:
a determination unit (5) configured to compare the original model (10) with the matching
aggregate model (20) and make a determination of a feature point on the workpiece (W), wherein said feature point refers to a location representing a feature that serves as a mark when setting the workpiece (W), and wherein said feature point is a singular portion where there is no rotational or inverse symmetry;
a display unit (6) configured to display the feature point in a highlighted manner, along with an image of the workpiece, on a display screen of a display device based on a determination result of the determination unit (5) so as to enable an operator (M) to set the workpiece (W) in a correct orientation using the highlighted feature point (P) as a mark.

2. The workpiece display assistance device according to claim 1, wherein the determination unit (5) determines presence or absence of the feature point based on whether or not the matching aggregate model (20) is rotationally symmetric or inversely symmetric with the original model (10).

3. The workpiece display assistance device according to claim 2, wherein the determination unit (5) executes a secondary determination process when determining that the matching aggregate model (20) is not rotationally symmetric or inversely symmetric and that the feature point is not present.

4. The workpiece display assistance device according to claim 3, wherein
prior to the secondary determination process,
the extraction unit (3) makes ranks based on match rates of the matching sections and extracts non-aligned portions of the respective matching models (11-17) with the original model (10) as non-matching sections, and
the model creation unit (4) refers to a pattern table in which combination patterns, obtained by combining the non-matching sections extracted based on the ranks, are arranged while use priorities are added, and creates a determination candidate model (30) by rotating and/or inverting the non-matching sections that make up the combination patterns to return to original states so as to conform to the original model (10), and combining the non-matching sections, and
in the secondary determination process, the determination unit (5) compares the determination candidate model (30) with each of the matching sections and makes a determination of the feature point.

5. The workpiece display assistance device according to claim 4, wherein the model creation unit (4) sequentially creates the determination candidate model (30) based on each of the use priorities.

6. The workpiece display assistance device according to claim 5, wherein up to a time point when the feature point is found by the secondary determination process, the model creation unit (4) continuously creates the determination candidate model (30) until a determination candidate model of a combination pattern lowest in the use priority is created.

7. The workpiece display assistance device according to any one of claims 4 to 6, wherein the secondary determination process includes:
a thinning process of extracting a location representing a feature point that meets a predetermined condition, for each of the non-matching sections that make up the combination pattern of the determination candidate model (30); and
a checking process of inspecting suitability of a determination candidate model indicated by a combination pattern including non-matching sections after thinning.

8. A workpiece display assistance method comprising:
obtaining, by a first model generation unit (1), shape data of a workpiece to be set, and generating an original model (10) of the workpiece based on the shape data;
generating, by a second model generation unit (2), a plurality of matching models (11-17) by rotating and/or inverting the original model (10);
matching, by an extraction unit (3), each of the plurality of matching models (11-17) to the original model (10) and extracting aligned portions of the respective matching models (11-17) with the original model (10) as matching sections;
creating, by a model creation unit (4), a matching aggregate model (20) by aggregating the matching sections extracted in a state conforming to the original model (10) and synthesizing the matching sections;
**characterized in that** the display assistance method further comprises:
comparing, by a determination unit (5), the original model (10) with the matching aggregate
model (20) and determining a feature point on the workpiece (W), wherein said feature point refers to a location representing a feature that serves as a mark when setting the workpiece (W), and wherein said feature point is a singular portion where there is no rotational or inverse symmetry; and
displaying, by a display unit (6), the feature point in a highlighted manner, along with an
image of the workpiece, on a display screen of a display device based on a determination result of the determination unit (5) so as to enable an operator (M) to set the workpiece (W) in a correct orientation using the highlighted feature point (P) as a mark.

9. The workpiece display assistance method according to claim 8, wherein in the determining, presence or absence of the feature point is determined based on whether or not the matching aggregate model (20) is rotationally symmetric or inversely symmetric with the original model (10).

10. The workpiece display assistance method according to claim 9, wherein in the determining, a secondary determination process is executed when it is determined that the matching aggregate model (20) is not rotationally symmetric or inversely symmetric and that the feature point is not present.

11. The workpiece display assistance method according to claim 10, wherein
prior to the secondary determination process,
in the extracting, ranks are made based on match rates of the matching sections, and non-aligned portions of the respective matching models (11-17) with the original model (10) are extracted as non-matching sections, and
in the model creating, a pattern table is referred to in which combination patterns, obtained by combining the non-matching sections extracted in the extracting based on the ranks, are arranged while use priorities are added, and a determination candidate model (30) is created by rotating and/or inverting the non-matching sections that make up the combination patterns to return to original states so as to conform to the original model (10), and combining the non-matching sections, and
in the secondary determination process, the determination unit (5) compares the determination candidate model (30) with each of the matching sections and makes a determination of the feature point.

12. The workpiece display assistance method according to claim 11, wherein in the model creating, the determination candidate model (30) is sequentially created based on each of the use priorities.

13. The workpiece display assistance method according to claim 12, wherein in the model creating, up to a time point when the feature point is found by the secondary determination process, the determination candidate model (30) is continuously created until a determination candidate model of a combination pattern lowest in the use priority is created.

14. The workpiece display assistance method according to any one of claims 11 to 13, wherein the secondary determination process includes:
a thinning process of extracting a location representing a feature point that meets a predetermined condition, for each of the non-matching sections that make up the combination pattern of the determination candidate model (30); and
a checking process of inspecting suitability of a determination candidate model indicated by a combination pattern including non-matching sections after thinning.

15. A workpiece display assistance program which when executed by a computer causes the computer to execute:
obtaining, by a first model generation unit (1), shape data of a workpiece to be set, and generating an original model (10) of the workpiece based on the shape data;
generating, by a second model generation unit (2), a plurality of matching models (11-17) by rotating and/or inverting the original model (10);
matching, by an extraction unit (3), each of the plurality of matching models (11-17) to the original model (10) and extracting aligned portions of the respective matching models (11-17) with the original model (10) as matching sections;
creating, by a model creation unit (4), a matching aggregate model (20) by aggregating the matching sections extracted in a state conforming to the original model (10) and synthesizing the matching sections;
**characterized by**:
comparing, by a determination unit (5), the original model (10) with the matching aggregate
model (20) and determining a feature point on the workpiece (W), wherein said feature point refers to a location representing a feature that serves as a mark when setting the workpiece (W), and wherein said feature point is a singular portion where there is no rotational or inverse symmetry; and
displaying, by a display unit (6), the feature point in a highlighted manner, along with an
image of the workpiece, on a display screen of a display device based on a determination result of the determination unit (5) so as to enable an operator (M) to set the workpiece (W) in a correct orientation using the highlighted feature point (P) as a mark.

16. The workpiece display assistance program according to claim 15, wherein in the determining, presence or absence of the feature point is determined based on whether or not the matching aggregate model (20) is rotationally symmetric or inversely symmetric with the original model (10).

17. The workpiece display assistance program according to claim 16, wherein in the determining, a secondary determination process is executed when it is determined that the matching aggregate model (20) is not rotationally symmetric or inversely symmetric and that the feature point is not present.

18. The workpiece display assistance program according to claim 17, wherein
prior to the secondary determination process,
in the extracting, ranks are made based on match rates of the matching sections, and non-aligned portions of the respective matching models (11-17) with the original model (10) are extracted as non-matching sections, and
in the model creating, a pattern table is referred to in which combination patterns, obtained by combining the non-matching sections extracted in the extracting based on the ranks, are arranged while use priorities are added, and a determination candidate model (30) is created by rotating and/or inverting the non-matching sections that make up the combination patterns to return to original states so as to conform to the original model (10), and combining the non-matching sections, and
in the secondary determination process, the determination unit (5) compares the determination candidate model (30) with each of the matching sections and makes a determination of the feature point.

19. The workpiece display assistance program according to claim 18, wherein in the model creating, the determination candidate model (30) is sequentially created based on each of the use priorities.

20. The workpiece display assistance program according to claim 19, wherein in the model creating, up to a time point when the feature point is found by the secondary determination process, the determination candidate model (30) is continuously created until a determination candidate model of a combination pattern lowest in the use priority is created.

21. The workpiece display assistance program according to any one of claims 18 to 20, wherein the secondary determination process includes:
a thinning process of extracting a location representing a feature point that meets a predetermined condition, for each of the non-matching sections that make up the combination pattern of the determination candidate model (30); and
a checking process of inspecting suitability of a determination candidate model indicated by a combination pattern including non-matching sections after thinning.

## Patentansprüche

1. Werkstück-Anzeigeunterstützungsvorrichtung, umfassend:
eine erste Modellerzeugungseinheit (1), ausgebildet zum Ermitteln von Formdaten eines einzustellenden Werkstücks und Erzeugen eines Originalmodells (10) des Werkstücks basierend auf den Formdaten; eine zweite Modellerzeugungseinheit (2), ausgebildet zum Erzeugen einer Vielzahl von passenden Modellen (11-17) durch Drehen und/oder Invertieren des Originalmodells (10);
eine Extraktionseinheit (3), ausgebildet zum Anpassen von jedem der Vielzahl von passenden Modellen (11-17) mit dem Originalmodell (10) und Extrahieren von ausgerichteten Abschnitten der jeweiligen passenden Modelle (11-17) mit dem Originalmodell (10) als passende Abschnitte;
eine Modellerzeugungseinheit (4), ausgebildet zum Erzeugen eines passenden Aggregatmodells (20) durch Aggregation der in einem dem Originalmodell (10) entsprechenden Zustand extrahierten passenden Abschnitte und Synthetisieren der passenden Abschnitte;
**dadurch gekennzeichnet, dass** die Anzeigeunterstützungsvorrichtung ferner umfasst:
eine Bestimmungseinheit (5), ausgebildet zum Vergleichen des Originalmodells (10) mit dem passenden Aggregatmodell (20) und Durchführen einer Bestimmung eines Merkmalspunkts auf dem Werkstück (W), wobei sich der Merkmalspunkt auf eine ein Merkmal darstellende Position bezieht, die als eine Kennzeichnung beim Einstellen des Werkstücks (W) dient, und wobei der Merkmalspunkt ein einzelner Abschnitt ist, in dem keine Dreh- oder Inverssymmetrie besteht;
eine Anzeigeeinheit (6), ausgebildet zum Anzeigen des Merkmalspunkts auf eine hervorgehobene Weise zusammen mit einem Bild des Werkstücks auf einem Anzeigebildschirm einer Anzeigevorrichtung basierend auf einem Bestimmungsergebnis der Bestimmungseinheit (5), um einem Bediener (M) das Einstellen des Werkstücks (W) in einer korrekten Ausrichtung unter Verwendung des hervorgehobenen Merkmalspunkts (P) als eine Kennzeichnung zu ermöglichen.

2. Werkstück-Anzeigeunterstützungsvorrichtung nach Anspruch 1, wobei die Bestimmungseinheit (5) das Vorhandensein oder Fehlen des Merkmalspunkts basierend darauf, ob das passende Aggregatmodell (20) drehsymmetrisch oder inverssymmetisch mit dem Originalmodell (10) ist, bestimmt.

3. Werkstück-Anzeigeunterstützungsvorrichtung nach Anspruch 2, wobei die Bestimmungseinheit (5) einen sekundären Bestimmungsprozess beim Bestimmen, dass das passende Aggregatmodell (20) nicht drehsymmetrisch oder inverssymmetrisch ist und dass der Merkmalspunkt nicht vorhanden ist, ausführt.

4. Werkstück-Anzeigeunterstützungsvorrichtung nach Anspruch 3, wobei vor dem sekundären Bestimmungsprozess
die Extraktionseinheit (3) Rangfolgen basierend auf Passraten der passenden Abschnitte festlegt und nicht ausgerichtete Abschnitte der jeweiligen passenden Modelle (11-17) mit dem Originalmodell (10) als nicht passende Abschnitte extrahiert, und
sich die Modellerzeugungseinheit (4) auf eine Mustertabelle bezieht, in der Kombinationsmuster, ermittelt durch Kombinieren der basierend auf den Rangfolgen extrahierten nicht passenden Abschnitte, angeordnet sind, während Verwendungsprioritäten hinzugefügt werden, und ein Bestimmungskandidatenmodell (30) durch Drehen und/oder Invertieren der nicht passenden Abschnitte, welche die Kombinationsmuster bilden, zum Wiederherstellen von Originalzuständen für ein Übereinstimmen mit dem Originalmodell (10) und Kombinieren der nicht passenden Abschnitt erzeugt, und
im sekundären Bestimmungsprozess die Bestimmungseinheit (5) das Bestimmungskandidatenmodell (30) mit jedem der passenden Abschnitte vergleicht und eine Bestimmung des Merkmalspunkts durchführt.

5. Werkstück-Anzeigeunterstützungsvorrichtung nach Anspruch 4, wobei die Modellerzeugungseinheit (4) nacheinander das Bestimmungskandidatenmodell (30) basierend auf jeder der Verwendungsprioritäten erzeugt.

6. Werkstück-Anzeigeunterstützungsvorrichtung nach Anspruch 5, wobei bis zu einem Zeitpunkt, zu dem der Merkmalspunkt durch den sekundären Bestimmungsprozess gefunden wird, die Modellerzeugungseinheit (4) kontinuierlich das Bestimmungskandidatenmodell (30) erzeugt, bis ein Bestimmungskandidatenmodell eines Kombinationsmusters mit der niedrigsten Verwendungspriorität erzeugt wird.

7. Werkstück-Anzeigeunterstützungsvorrichtung nach einem der Ansprüche 4 bis 6, wobei der sekundäre Bestimmungsprozess umfasst:
einen Ausdünnungsprozess zum Extrahieren einer Position zum Darstellen eines Merkmalspunkts, der eine vorgegebene Bedingung erfüllt, für jeden der nicht passenden Abschnitte, die das Kombinationsmuster des Bestimmungskandidatenmodells (30) bilden; und
einen Prüfprozess zum Überprüfen der Eignung eines Bestimmungskandidatenmodells, angegeben durch ein Kombinationsmuster, das nicht passende Abschnitte nach dem Ausdünnen umfasst.

8. Werkstück-Anzeigeunterstützungsverfahren, umfassend:
Ermitteln von Formdaten eines einzustellenden Werkstücks und Erzeugen eines Originalmodells (10) des Werkstücks basierend auf den Formdaten durch eine erste Modellerzeugungseinheit (1); Erzeugen einer Vielzahl von passenden Modellen (11-17) durch Drehen und/oder Invertieren des Originalmodells (10) durch eine zweite Modellerzeugungseinheit (2);
Anpassen von jedem der Vielzahl von passenden Modellen (11-17) mit dem Originalmodell (10) und Extrahieren von ausgerichteten Abschnitten der jeweiligen passenden Modelle (11-17) mit dem Originalmodell (10) als passende Abschnitte durch eine Extraktionseinheit (3);
Erzeugen eines passenden Aggregatmodells (20) durch Aggregation der in einem dem Originalmodell (10) entsprechenden Zustand extrahierten passenden Abschnitte und Synthetisieren der passenden Abschnitte durch eine Modellerzeugungseinheit (4);
**dadurch gekennzeichnet, dass** das Anzeigeunterstützungsverfahren ferner umfasst:
Vergleichen des Originalmodells (10) mit dem passenden Aggregatmodell (20) und Bestimmen eines Merkmalspunkts auf dem Werkstück (W) durch eine Bestimmungseinheit (5), wobei sich der Merkmalspunkt auf eine ein Merkmal darstellende Position bezieht, die als eine Kennzeichnung beim Einstellen des Werkstücks (W) dient, und wobei der Merkmalspunkt ein einzelner Abschnitt ist, in dem keine Dreh- oder Inverssymmetrie besteht; und
Anzeigen des Merkmalspunkts auf eine hervorgehobene Weise zusammen mit einem Bild des Werkstücks auf einem Anzeigebildschirm einer Anzeigevorrichtung basierend auf einem Bestimmungsergebnis der Bestimmungseinheit (5) durch eine Anzeigeeinheit (6), um einem Bediener (M) das Einstellen des Werkstücks (W) in einer korrekten Ausrichtung unter Verwendung des hervorgehobenen Merkmalspunkts (P) als eine Kennzeichnung zu ermöglichen.

9. Werkstück-Anzeigeunterstützungsverfahren nach Anspruch 8, wobei beim Bestimmen das Vorhandensein oder Fehlen des Merkmalspunkts basierend darauf, ob das passende Aggregatmodell (20) drehsymmetrisch oder inverssymmetisch mit dem Originalmodell (10) ist, bestimmt wird.

10. Werkstück-Anzeigeunterstützungsverfahren nach Anspruch 9, wobei beim Bestimmen ein sekundärer Bestimmungsprozess ausgeführt wird, wenn bestimmt wird, dass das passende Aggregatmodell (20) nicht drehsymmetrisch oder inverssymmetrisch ist und dass der Merkmalspunkt nicht vorhanden ist.

11. Werkstück-Anzeigeunterstützungsverfahren nach Anspruch 10, wobei
vor dem sekundären Bestimmungsprozess,
beim Extrahieren Rangfolgen basierend auf Passraten der passenden Abschnitte festgelegt werden und nicht ausgerichtete Abschnitte der jeweiligen passenden Modelle (11-17) mit dem Originalmodell (10) als nicht passende Abschnitte extrahiert werden, und
bei der Modellerzeugung ein Bezug auf eine Mustertabelle erfolgt, in der Kombinationsmuster, ermittelt durch Kombinieren der basierend auf den Rangfolgen beim Extrahieren extrahierten nicht passenden Abschnitte, angeordnet sind, während Verwendungsprioritäten hinzugefügt werden, und ein Bestimmungskandidatenmodell (30) durch Drehen und/oder Invertieren der nicht passenden Abschnitte, welche die Kombinationsmuster bilden, zum Wiederherstellen von Originalzuständen für ein Übereinstimmen mit dem Originalmodell (10) und Kombinieren der nicht passenden Abschnitt erzeugt wird, und
im sekundären Bestimmungsprozess die Bestimmungseinheit (5) das Bestimmungskandidatenmodell (30) mit jedem der passenden Abschnitte vergleicht und eine Bestimmung des Merkmalspunkts durchführt.

12. Werkstück-Anzeigeunterstützungsverfahren nach Anspruch 11, wobei bei der Modellerzeugung nacheinander das Bestimmungskandidatenmodell (30) basierend auf jeder der Verwendungsprioritäten erzeugt wird.

13. Werkstück-Anzeigeunterstützungsverfahren nach Anspruch 12, wobei bei der Modellerzeugung bis zu einem Zeitpunkt, zu dem der Merkmalspunkt durch den sekundären Bestimmungsprozess gefunden wird, das Bestimmungskandidatenmodell (30) kontinuierlich erzeugt wird, bis ein Bestimmungskandidatenmodell eines Kombinationsmusters mit der niedrigsten Verwendungspriorität erzeugt wird.

14. Werkstück-Anzeigeunterstützungsverfahren nach einem der Ansprüche 11 bis 13, wobei der sekundäre Bestimmungsprozess umfasst:
einen Ausdünnungsprozess zum Extrahieren einer Position zum Darstellen eines Merkmalspunkts, der eine vorgegebene Bedingung erfüllt, für jeden der nicht passenden Abschnitte, die das Kombinationsmuster des Bestimmungskandidatenmodells (30) bilden; und
einen Prüfprozess zum Überprüfen der Eignung eines Bestimmungskandidatenmodells, angegeben durch ein Kombinationsmuster, das nicht passende Abschnitte nach dem Ausdünnen umfasst.

15. Werkstück-Anzeigeunterstützungsprogramm, das, wenn von einem Computer ausgeführt, den Computer veranlasst zum Ausführen:
des Ermittelns von Formdaten eines einzustellenden Werkstücks und Erzeugens eines Originalmodells (10) des Werkstücks basierend auf den Formdaten durch eine erste Modellerzeugungseinheit (1); des Erzeugens einer Vielzahl von passenden Modellen (11-17) durch Drehen und/oder Invertieren des Originalmodells (10) durch eine zweite Modellerzeugungseinheit (2);
des Anpassens von jedem der Vielzahl von passenden Modellen (11-17) mit dem Originalmodell (10) und Extrahierens von ausgerichteten Abschnitten der jeweiligen passenden Modelle (11-17) mit dem Originalmodell (10) als passende Abschnitte durch eine Extraktionseinheit (3);
des Erzeugens eines passenden Aggregatmodells (20) durch Aggregation der in einem dem Originalmodell (10) entsprechenden Zustand extrahierten passenden Abschnitte und Synthetisieren der passenden Abschnitte durch eine Modellerzeugungseinheit (4);
**gekennzeichnet durch:**
Vergleichen des Originalmodells (10) mit dem passenden Aggregatmodell (20) und Bestimmen eines Merkmalspunkts auf dem Werkstück (W) durch eine Bestimmungseinheit (5), wobei sich der Merkmalspunkt auf eine ein Merkmal darstellende Position bezieht, die als eine Kennzeichnung beim Einstellen des Werkstücks (W) dient, und wobei der Merkmalspunkt ein einzelner Abschnitt ist, in dem keine Dreh- oder Inverssymmetrie besteht; und
Anzeigen des Merkmalspunkts auf eine hervorgehobene Weise zusammen mit einem Bild des Werkstücks auf einem Anzeigebildschirm einer Anzeigevorrichtung basierend auf einem Bestimmungsergebnis der Bestimmungseinheit (5) durch eine Anzeigeeinheit (6), um einem Bediener (M) das Einstellen des Werkstücks (W) in einer korrekten Ausrichtung unter Verwendung des hervorgehobenen Merkmalspunkts (P) als eine Kennzeichnung zu ermöglichen.

16. Werkstück-Anzeigeunterstützungsprogramm nach Anspruch 15, wobei beim Bestimmen das Vorhandensein oder Fehlen des Merkmalspunkts basierend darauf, ob das passende Aggregatmodell (20) drehsymmetrisch oder inverssymmetisch mit dem Originalmodell (10) ist, bestimmt wird.

17. Werkstück-Anzeigeunterstützungsprogramm nach Anspruch 16, wobei beim Bestimmen ein sekundärer Bestimmungsprozess ausgeführt wird, wenn bestimmt wird, dass das passende Aggregatmodell (20) nicht drehsymmetrisch oder inverssymmetrisch ist und dass der Merkmalspunkt nicht vorhanden ist.

18. Werkstück-Anzeigeunterstützungsprogramm nach Anspruch 17, wobei vor dem sekundären Bestimmungsprozess
beim Extrahieren Rangfolgen basierend auf Passraten der passenden Abschnitte festgelegt werden und nicht ausgerichtete Abschnitte der jeweiligen passenden Modelle (11-17) mit dem Originalmodell (10) als nicht passende Abschnitte extrahiert werden, und
bei der Modellerzeugung ein Bezug auf eine Mustertabelle erfolgt, in der Kombinationsmuster, ermittelt durch Kombinieren der basierend auf den Rangfolgen beim Extrahieren extrahierten nicht passenden Abschnitte, angeordnet sind, während Verwendungsprioritäten hinzugefügt werden, und ein Bestimmungskandidatenmodell (30) durch Drehen und/oder Invertieren der nicht passenden Abschnitte, welche die Kombinationsmuster bilden, zum Wiederherstellen von Originalzuständen für ein Übereinstimmen mit dem Originalmodell (10) und Kombinieren der nicht passenden Abschnitt erzeugt wird, und
im sekundären Bestimmungsprozess die Bestimmungseinheit (5) das Bestimmungskandidatenmodell (30) mit jedem der passenden Abschnitte vergleicht und eine Bestimmung des Merkmalspunkts durchführt.

19. Werkstück-Anzeigeunterstützungsprogramm nach Anspruch 18, wobei bei der Modellerzeugung nacheinander das Bestimmungskandidatenmodell (30) basierend auf jeder der Verwendungsprioritäten erzeugt wird.

20. Werkstück-Anzeigeunterstützungsprogramm nach Anspruch 19, wobei bei der Modellerzeugung bis zu einem Zeitpunkt, zu dem der Merkmalspunkt durch den sekundären Bestimmungsprozess gefunden wird, das Bestimmungskandidatenmodell (30) kontinuierlich erzeugt wird, bis ein Bestimmungskandidatenmodell eines Kombinationsmusters mit der niedrigsten Verwendungspriorität erzeugt wird.

21. Werkstück-Anzeigeunterstützungsprogramm nach einem der Ansprüche 18 bis 20, wobei der sekundäre Bestimmungsprozess umfasst:
einen Ausdünnungsprozess zum Extrahieren einer Position zum Darstellen eines Merkmalspunkts, der eine vorgegebene Bedingung erfüllt, für jeden der nicht passenden Abschnitte, die das Kombinationsmuster des Bestimmungskandidatenmodells (30) bilden; und
einen Prüfprozess zum Überprüfen der Eignung eines Bestimmungskandidatenmodells, angegeben durch ein Kombinationsmuster, das nicht passende Abschnitte nach dem Ausdünnen umfasst.

## Revendications

1. Dispositif d'assistance à l'affichage de pièces à usiner comprenant :
une première unité de génération de modèles (1) configurée pour obtenir des données de forme d'une pièce à placer et générer un modèle original (10) de la pièce sur la base des données de forme ;
une seconde unité de génération de modèles (2) configurée pour générer une pluralité de modèles de correspondance (11-17) par rotation et/ou inversion du modèle original (10) ;
une unité d'extraction (3) configurée pour faire correspondre chacun de la pluralité de modèles de correspondance (11-17) au modèle original (10) et pour extraire des parties des modèles de correspondance respectifs (11-17) alignées avec le modèle original (10) en tant que sections de correspondance ;
une unité de création de modèle (4) configurée pour créer un modèle agrégé de correspondance (20) en agrégeant les sections de correspondance extraites dans un état conforme au modèle original (10) et en synthétisant les sections de correspondance ;
**caractérisé en ce que** le dispositif d'assistance à l'affichage comprend en outre :
une unité de détermination (5) configurée pour comparer le modèle original (10) avec le modèle agrégé de correspondance (20) et déterminer un point caractéristique sur la pièce (W), où ledit point caractéristique fait référence à un emplacement représentant une caractéristique qui sert de repère lors du placement de la pièce (W), et où ledit point caractéristique est une partie singulière où il n'y a pas de symétrie de rotation ou de symétrie inverse ; et
une unité d'affichage (6) configurée pour afficher le point caractéristique en surbrillance, en même temps qu'une image de la pièce, sur un écran d'affichage d'un dispositif d'affichage sur la base d'un résultat de détermination de l'unité de détermination (5) afin de permettre à un opérateur (M) de placer la pièce (W) dans une orientation correcte en utilisant le point caractéristique en surbrillance (P) en tant que repère.

2. Dispositif d'assistance à l'affichage de pièces à usiner selon la revendication 1, où l'unité de détermination (5) détermine la présence ou l'absence du point caractéristique en fonction de si le modèle agrégé de correspondance (20) est symétrique en rotation ou inversement symétrique par rapport au modèle original (10), ou non.

3. Dispositif d'assistance à l'affichage de pièces à usiner selon la revendication 2, où l'unité de détermination (5) exécute un processus de détermination secondaire lorsqu'elle détermine que le modèle agrégé de correspondance (20) n'est pas symétrique en rotation ou inversement symétrique et que le point caractéristique n'est pas présent.

4. Dispositif d'assistance à l'affichage de pièces à usiner selon la revendication 3, où avant le processus de détermination secondaire,
l'unité d'extraction (3) effectue des classements sur la base de taux de correspondance des sections de correspondance et extrait des parties des modèles de correspondance respectifs (11-17) non alignées avec le modèle original (10) en tant que sections de non-correspondance, et
l'unité de création de modèle (4) se réfère à un tableau de schémas dans lequel des schémas de combinaison, obtenus en combinant les sections de non-correspondance extraites sur la base des classements, sont agencés en ajoutant des priorités d'utilisation, et crée un modèle candidat à la détermination (30) en faisant pivoter et/ou en inversant les sections de non-correspondance qui constituent les schémas de combinaison pour revenir à des états d'origine de manière à se conformer au modèle original (10), et en combinant les sections de non-correspondance, et
dans le processus de détermination secondaire, l'unité de détermination (5) compare le modèle candidat à la détermination (30) avec chacune des sections de correspondance et détermine le point caractéristique.

5. Dispositif d'assistance à l'affichage de pièces à usiner selon la revendication 4, où l'unité de création de modèles (4) crée séquentiellement le modèle candidat à la détermination (30) sur la base de chacune des priorités d'utilisation.

6. Dispositif d'assistance à l'affichage de pièces à usiner selon la revendication 5, où, jusqu'à un moment où le point caractéristique est trouvé par le processus de détermination secondaire, l'unité de création de modèle (4) crée continuellement le modèle candidat à la détermination (30) jusqu'à ce qu'un modèle candidat à la détermination d'un schéma de combinaison le plus bas dans l'ordre de priorité d'utilisation soit créé.

7. Dispositif d'assistance à l'affichage de pièces à usiner selon l'une quelconque des revendications 4 à 6, où le processus de détermination secondaire inclut :
un processus de réduction consistant à extraire un emplacement représentant un point caractéristique qui répond à une condition prédéterminée, pour chacune des sections de non-correspondance qui constituent le schéma de combinaison du modèle candidat à la détermination (30) ; et
un processus de vérification consistant à inspecter la pertinence d'un modèle candidat à la détermination indiqué par un schéma de combinaison incluant des sections de non-correspondance après la réduction.

8. Procédé d'assistance à l'affichage de pièces à usiner comprenant :
l'obtention, par une première unité de génération de modèle (1), de données de forme d'une pièce à placer, et
la génération d'un modèle original (10) de la pièce sur la base des données de forme ;
la génération, par une seconde unité de génération de modèles (2), d'une pluralité de modèles de correspondance (11-17) par rotation et/ou inversion du modèle original (10) ;
la mise en correspondance, par une unité d'extraction (3), de chacun de la pluralité de modèles de correspondance (11-17) avec le modèle original (10) et l'extraction de parties des modèles de correspondance respectifs (11-17) alignées avec le modèle original (10) en tant que sections de correspondance ;
la création, par une unité de création de modèle (4), d'un modèle agrégé de correspondance (20) en agrégeant les sections de correspondance extraites dans un état conforme au modèle original (10) et en synthétisant les sections de correspondance ;
**caractérisé en ce que** le procédé d'assistance à l'affichage comprend en outre :
la comparaison, par une unité de détermination (5), du modèle original (10) avec le modèle agrégé de correspondance (20) et la détermination d'un point caractéristique sur la pièce (W), où ledit point caractéristique fait référence à un emplacement représentant une caractéristique qui sert de repère lors du placement de la pièce (W), et où ledit point caractéristique est une partie singulière où il n'y a pas de symétrie de rotation ou de symétrie inverse ; et
l'affichage, par une unité d'affichage (6), du point caractéristique en surbrillance, en même temps qu'une image de la pièce, sur un écran d'affichage d'un dispositif d'affichage sur la base d'un résultat de détermination de l'unité de détermination (5) afin de permettre à un opérateur (M) de placer la pièce à usiner (W) dans une orientation correcte en utilisant le point caractéristique en surbrillance (P) comme repère.

9. Procédé d'assistance à l'affichage de pièces à usiner selon la revendication 8, où, lors de la détermination, la présence ou l'absence du point caractéristique est déterminée en fonction de si le modèle agrégé de correspondance (20) est symétrique en rotation ou inversement symétrique par rapport au modèle original (10), ou non.

10. Procédé d'assistance à l'affichage de pièces à usiner selon la revendication 9, où, lors de la détermination, un processus de détermination secondaire est exécuté lorsqu'il est déterminé que le modèle agrégé de correspondance (20) n'est pas symétrique en rotation ou inversement symétrique et que le point caractéristique n'est pas présent.

11. Procédé d'assistance à l'affichage de pièces à usiner selon la revendication 10, où avant le processus de détermination secondaire,
lors de l'extraction, des classements sont effectués sur la base de taux de correspondance des sections de correspondance, et des parties des modèles de correspondance respectifs (11-17) non alignées avec le modèle original (10) sont extraites en tant que sections de non-correspondance, et
lors de la création de modèle, un tableau de schémas est consulté dans lequel des schémas de combinaison, obtenus en combinant les sections de non-correspondance extraites lors de l'extraction sur la base des classements, sont agencés en ajoutant des priorités d'utilisation, et un modèle candidat à la détermination (30) est créé par rotation et/ou inversion des sections de non-correspondance qui constituent les schémas de combinaison pour revenir à des états d'origine de manière à se conformer au modèle original (10), et en combinant les sections de non-correspondance, et
lors du processus de détermination secondaire, l'unité de détermination (5) compare le modèle candidat à la détermination (30) avec chacune des sections de correspondance et détermine le point caractéristique.

12. Procédé d'assistance à l'affichage de pièces à usiner selon la revendication 11, où, lors de la création de modèle, le modèle candidat à la détermination (30) est créé de manière séquentielle sur la base de chacune des priorités d'utilisation.

13. Procédé d'assistance à l'affichage de pièces à usiner selon la revendication 12, où, lors de la création de modèle, jusqu'à un moment où le point caractéristique est trouvé par le processus de détermination secondaire, le modèle candidat à la détermination (30) est continuellement créé jusqu'à ce qu'un modèle candidat à la détermination d'un schéma de combinaison le plus bas dans l'ordre de priorité d'utilisation soit créé.

14. Procédé d'assistance à la visualisation de pièces selon l'une quelconque des revendications 11 à 13, où le processus de détermination secondaire inclut :
un processus de réduction consistant à extraire un emplacement représentant un point caractéristique qui répond à une condition prédéterminée, pour chacune des sections de non-correspondance qui constituent le schéma de combinaison du modèle candidat à la détermination (30) ; et
un processus de vérification consistant à inspecter la pertinence d'un modèle candidat à la détermination indiqué par un schéma de combinaison incluant des sections de non-correspondance après la réduction.

15. Programme d'assistance à l'affichage de pièces à usiner qui, lorsqu'il est exécuté par un ordinateur amène l'ordinateur à exécuter :
l'obtention, par une première unité de génération de modèle (1), de données de forme d'une pièce à placer, et
la génération d'un modèle original (10) de la pièce sur la base des données de forme ;
la génération, par une seconde unité de génération de modèle (2), d'une pluralité de modèles de correspondance (11-17) par rotation et/ou inversion du modèle original (10) ;
la mise en correspondance, par une unité d'extraction (3), de chacun de la pluralité de modèles de correspondance (11-17) avec le modèle original (10) et l'extraction de parties des modèles de correspondance respectifs (11-17) alignées avec le modèle original (10) en tant que sections de correspondance ;
la création, par une unité de création de modèle (4), d'un modèle agrégé de correspondance (20) en agrégeant les sections de correspondance extraites dans un état conforme au modèle original (10) et en synthétisant les sections de correspondance ;
**caractérisé par** :
la comparaison, par une unité de détermination (5), du modèle original (10) avec le modèle agrégé de correspondance (20) et la détermination d'un point caractéristique sur la pièce (W), où ledit point caractéristique fait référence à un emplacement représentant une caractéristique qui sert de repère lors du placement de la pièce (W), et où ledit point caractéristique est une partie singulière où il n'y a pas de symétrie de rotation ou de symétrie inverse ; et
l'affichage, par une unité d'affichage (6), du point caractéristique en surbrillance, en même temps qu'une image de la pièce, sur un écran d'affichage d'un dispositif d'affichage sur la base d'un résultat de détermination de l'unité de détermination (5) afin de permettre à un opérateur (M) de placer la pièce à usiner (W) dans une orientation correcte en utilisant le point caractéristique en surbrillance (P) comme repère.

16. Programme d'assistance à l'affichage de pièces à usiner selon la revendication 15, où, lors de la détermination, la présence ou l'absence du point caractéristique est déterminée en fonction de si le modèle agrégé de correspondance (20) est symétrique en rotation ou inversement symétrique par rapport au modèle original (10), ou non.

17. Programme d'assistance à l'affichage de pièces à usiner selon la revendication 16, où, lors de la détermination, un processus de détermination secondaire est exécuté lorsqu'il est déterminé que le modèle agrégé de correspondance (20) n'est pas symétrique en rotation ou inversement symétrique et que le point caractéristique n'est pas présent.

18. Programme d'assistance à l'affichage de pièces à usiner selon la revendication 17, où avant le processus de détermination secondaire,
lors de l'extraction, des classements sont effectués sur la base de taux de correspondance des sections de correspondance, et des parties des modèles de correspondance respectifs (11-17) non alignées sur le modèle original (10) sont extraites en tant que sections de non-correspondance, et
lors de la création de modèle, un tableau de schémas est consulté dans lequel des schémas de combinaison, obtenus en combinant les sections de non-correspondance extraites lors de l'extraction sur la base des classements, sont agencés en ajoutant des priorités d'utilisation, et un modèle candidat à la détermination (30) est créé par rotation et/ou inversion des sections de non-correspondance qui constituent les schémas de combinaison pour revenir à des états d'origine de manière à se conformer au modèle original (10), et en combinant les sections de non-correspondance, et
lors du processus de détermination secondaire, l'unité de détermination (5) compare le modèle candidat à la détermination (30) avec chacune des sections de correspondance et détermine le point caractéristique.

19. Programme d'assistance à l'affichage de pièces à usiner selon la revendication 18, où, lors de la création de modèle, le modèle candidat à la détermination (30) est créé de manière séquentielle sur la base de chacune des priorités d'utilisation.

20. Programme d'assistance à l'affichage de pièces à usiner selon la revendication 19, où, lors de la création de modèle, jusqu'à un moment où le point caractéristique est trouvé par le processus de détermination secondaire, le modèle candidat à la détermination (30) est continuellement créé jusqu'à ce qu'un modèle candidat à la détermination d'un schéma de combinaison le plus bas dans l'ordre de priorité d'utilisation soit créé.

21. Programme d'assistance à l'affichage de pièces à usiner selon l'une quelconque des revendications 18 à 20,
où le processus de détermination secondaire inclut :
un processus de réduction consistant à extraire un emplacement représentant un point caractéristique qui répond à une condition prédéterminée, pour chacune des sections de non-correspondance qui constituent le schéma de combinaison du modèle candidat à la détermination (30) ; et
un processus de vérification consistant à inspecter la pertinence d'un modèle candidat à la détermination indiqué par un schéma de combinaison incluant des sections de non-correspondance après la réduction.
